# EUROPEAN PATENT SPECIFICATION

(11) **EP 1 650 952 B1**
(45) Date of publication and mention of the grant of the patent: **12.01.2011**
(21) Application number: 05023236.2
(22) Date of filing: 25.10.2005
(51) Int. Cl.: H04N 1/32

(54) **Recording medium storing image data and print information, and recording apparatus for the recording medium**
Aufzeichnungsmedium zur Aufzeichnung von Bilddaten und Druckinformation, und Aufzeichnungsvorrichtung dafür
Support d'enregistrement pour le stockage de données d'images et d'information d'impression, et dispositif d'enregistrement pour ceci

(30) Priority: 25.10.2004 US 621076 P; 18.11.2004 JP 2004334836
(43) Date of publication of application: 26.04.2006
(73) Proprietor: Panasonic Corporation, Kadoma-shi Osaka 571-8501 (JP)
(72) Inventor: Yamaguchi, Takehito, Hirakata-shi Osaka 573-0035 (JP); Sakaue, Shigeo, Minoo-shi Osaka 562-0045 (JP)
(74) Representative: Eisenführ, Speiser & Partner

(56) References cited:
- EP-A2- 0 860 980
- EP-A2- 0 869 660
- US-A1- 2001 048 534

## Description

### BACKGROUND OF THE INVENTION

### 1. Field of the Invention

The present invention relates to a recording medium for storing image data and print information for the image data and an apparatus for recording the print information to the recording medium.

### 2. Related Art

Conventionally, Digital Print Order Format (DPOF) is available as one of recording formats for a digital camera. DPOF is a format for recording print information about pictures to be printed desirably among images taken by a digital camera or number of copies of the pictures.

Use of DPOF makes it possible to record the print information used for automatically printing the photographed images on printers at a print service provider or an individual home. The print information is generated in the format compliant with DPOF and stored in a recording medium together with image data. The print information stored in the recording medium is analyzed on the printer side. Thus, the image data can be printed as specified by the print information (the related technologies are disclosed in JP 08-18911A and JP 06-8537A).

In the conventional DPOF, a DPOF file is defined as a file for specifying print information. The DPOF file includes files such as an automatic print file (autprint.mrk) and a Unicode text description file (unicode.mrk). Especially, the automatic print file stores information such as a desired number of copies to be printed, image size, title, cropping setting, device information, date and time, and user's name, address and telephone number, as print information.

When the print information as to how many copies should be printed and which images are outputted together, and so on are specified using a digital camera supporting DPOF, an automatic print file is generated and stored in a recording medium. Then, when the recording medium is simply set in the printer at home, the images are printed in accordance with the specified contents. Further, ordering to the print service provider to print the images can be done only by providing a recording medium already set to a print service provider, thus reducing various troubles in ordering.

However, the following problems have been noted in the conventional DPOF. The conventional DPOF is designed primarily to specify the image information, and there are too many constraints in specifying simple text information. Accordingly, a user can not freely specify a desired text as print information.

Further, a layout of images depends on printer's specification and cannot be specified in detail. For example, for ) specifying an index image including a plurality of images to be printed on one sheet of paper, the index image can be specified but the actual layout of the images, i.e. a number of images included in one sheet and positions of the images are dependent upon the printer's specification.

The European patent application EP 0 860 980 refers to a digital camera which includes a liquid crystal display (LCD) for viewing images captured from an image sensor installed on a removable memory card. The LCD also presents a user interface that allows the user to create a print order "utilization file". As individual images are viewed, the user can decide how many prints to make of the image, the print size, and the print quality. The memory card can then be inserted in a home printer, etc. The print order can then be automatically produced without any additional user intervention.

The European patent application EP 0 869 660 is directed towards a computer-readable recording medium for recording photograph print order in information. Ordering information is recorded as a structure to storage file having a hierarchical in a recording medium. The structure storage file comprises an orderer stream describing information regarding an orderer and an order storage describing the content of an order.

### SUMMARY OF THE INVENTION

The present invention is implemented in order to solve the aforementioned problems, and an object of the present invention is to provide a recording medium that stores print information together with the image data and a recording apparatus for recording the print information on the recording medium, thereby improving user's freedom and convenience in setting print information.

In a first aspect of the invention, a recording medium stores image data and print information for specifying specification relating to printing of the image data. The print information includes an automatic print file for specifying print content, and a print content specifying file which is referred to by the automatic print file and specifies detailed specification of an image to be printed. The print content specifying file includes information of image data to be printed, document structure information and style information relating to layout of the image to be printed. In the print content specifying file, the information of the image data to be printed and the style information are defined to be referred to by an external file.

In the recording medium, a first directory for storing the image data and a second directory for storing the print content specifying file may be provided under a root directory. The second directory may include a directory for storing the print content specifying file and a directory for storing the external file relating to the style information.

Alternatively in the recording medium, under a root directory, a first directory for storing the image data and a second directory for storing the print content specifying file may be provided. Under the second directory, the second directory may include a directory for storing the print content specifying file and the external file relating to the style information may be provided for each print content specifying file.

In a second aspect of the invention, a recording medium stores image data and print information for specifying specification relating to printing of the image data. The print information includes an automatic print file for specifying print content, and a print content specifying file which is referred to by the automatic print file and specifies detailed specifications of an image to be printed. The print content specifying file includes information of the image data to be printed, document structure information and style information relating to layout of the image to be printed. The information of the image data to be printed is defined, in the print content specifying file, to be referred to by an external file. The style information is directly written in the print content specifying file.

In a third aspect of the invention, a recording apparatus for generating print information for specifying specifications relating to printing of image data and recording the print information on a recording medium, includes an access section operable to mount the recording medium storing image data and access the recording medium; and a control section operable to control recording of information to the recording medium mounted on the access device. The control section generates an automatic print file for specifying print content and a print content specifying file referred to by the automatic print file, and records the generated files on the recording medium. The print content specifying file specifies detailed specification of image to be printed as the print information. The print content specifying file is generated such that the print content specifying file includes information of the image data to be printed, document structure information, and a style information relating to layout of the image to be printed, and that information of the image data to be printed and the style information are respectively referred to by an external file.

According to the present invention, the print information is specified using document structure information and style information. Thus, not only image data but also any text information can be specified in a print image, and layout of images can be optionally set in the print information. Further, information about image to be printed and style information of the image to be printed may be defined in the print information so as to be referenced by an external file. Thus the information can be edited or replaced easily.

### BRIEF DESCRIPTION OF THE DRAWINGS

Fig. 1 is a drawing showing a configuration of an imaging system according to an embodiment of the present invention.
Fig. 2 is a drawing explaining a configuration of print information stored in an external memory.
Fig. 3A shows an example of displayed text of a template list, and Fig. 3B shows an example of displayed text of a list of style sheets.
Fig. 4 is a drawing explaining a first example (type A) of a file structure of print content.
Fig. 5 is a drawing explaining a second example (type B) of a file structure of print content.
Fig. 6 is a drawing explaining a third example (type C) of a file structure of print content.
Fig. 7 is a drawing explaining a fourth example (type D) of a file structure of print content.
Fig. 8 is a drawing explaining a first example (pattern 1) of a directory structure.
Fig. 9 is a drawing explaining a second example (pattern 2) of the directory structure.
Fig. 10 is a drawing explaining a third example (pattern 3) of the directory structure.
Fig. 11 is a drawing explaining a fourth example (pattern 4) of the directory structure.
Fig. 12 shows a configuration of the imaging apparatus with a ROM storing style sheets and templates.
Fig. 13 is a flow chart of generation and writing processes of print contents of type A with style sheets and templates stored in the ROM of the imaging apparatus.
Fig. 14 is a drawing explaining generation and writing processes of print contents of type A with style sheets and templates stored in the ROM of the imaging apparatus.
Fig. 15 is a flow chart of generation and writing processes of print contents of type B with style sheets and templates stored in the ROM of the imaging apparatus.
Fig. 16 is a drawing explaining generation and writing processes of print contents of type B with style sheets and templates stored in the ROM of the imaging apparatus.
Fig. 17 is a flow chart of generation and writing processes of print contents of type C with style sheets and templates stored in the ROM of the imaging apparatus.
Fig. 18 is a drawing explaining generation and writing processes of print contents of type C with style sheets and templates stored in the ROM of the imaging apparatus.
Fig. 19 is a flow chart of generation and writing processes of print contents of type D with style sheets and templates stored in the ROM of the imaging apparatus.
Fig. 20 is a drawing explaining generation and writing processes of print contents of type D with style sheets and templates stored in the ROM of the imaging apparatus.
Fig. 21 shows a configuration of the imaging apparatus with style sheets and templates stored in an external memory.
Fig. 22 is a drawing explaining generation and writing processes of print contents of type A with style sheets and templates stored in the external memory.
Fig. 23 is a drawing explaining generation and writing processes of print contents of type B with style sheets and templates stored in the external memory.
Fig. 24 is a drawing explaining generation and writing processes of print contents of type C with style sheets and templates stored in the external memory.
Fig. 25 is a drawing explaining generation and writing processes of print contents of type D with style sheets and templates stored in the external memory.
Figs. 26A and 26B are drawings explaining a user interface in the imaging apparatus.
Figs. 27A and 27B are drawings explaining the user interface in the imaging apparatus (template designation sub mode "item selection").
Figs. 28A and 28B are drawings explaining the user interface in the imaging apparatus (template designation sub mode "text entry").
Fig. 29 is a drawing explaining the user interface in the imaging apparatus (template designation sub mode "external template").
Fig. 30 is a drawing explaining the user interface in the imaging apparatus (layout designation sub mode).
Fig. 31A and 31B are drawings for explaining the user interface in the imaging apparatus (selecting one print image from a plurality of images displayed).

### DESCRIPTION OF THE PREFERRED EMBODIMENTS

The following describes preferred embodiments of a recording medium and a recording apparatus according to the present invention referring to the drawings.

### 1. System Configuration

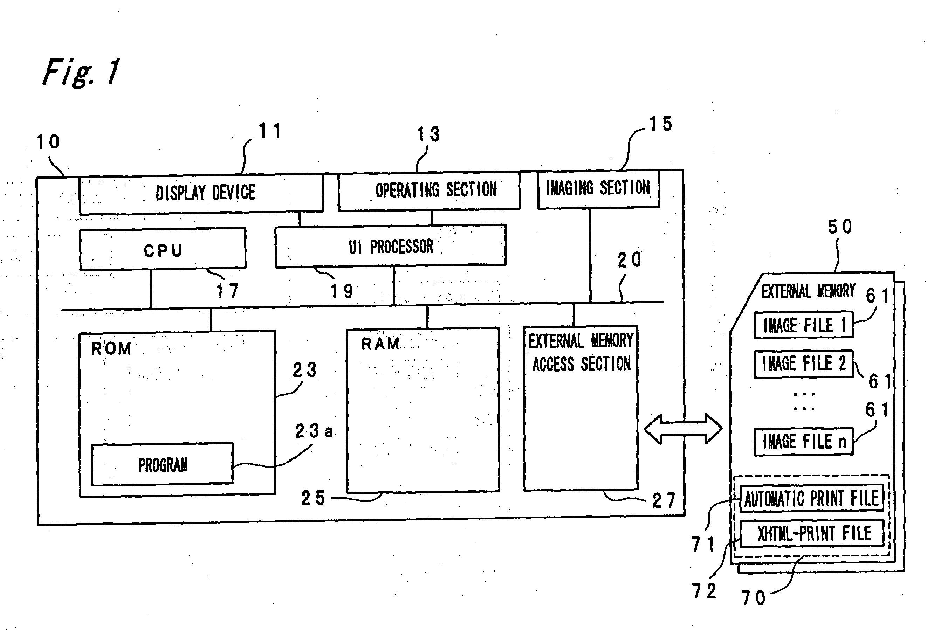

Fig. 1 is a block diagram illustrating a configuration of an imaging system according to an embodiment of the present invention. The imaging system includes an imaging apparatus 10 and an external memory 50.

The imaging apparatus 10 is a digital camera or the like for capturing an image and recording the captured image in the external memory 50 as image information. The imaging apparatus 10 includes a display device 11 that is a liquid crystal display, an operating section 13 on which a user operates with buttons, an imaging section 15 for capturing an image; a CPU 17 for controlling the imaging apparatus, and a user interface processor (UI processor) 19 for controlling the display device 11 and the operating section 13. The imaging apparatus 10 further includes a ROM 23 for storing a program 23a executed by the CPU 17, a RAM 25 loaded with the program executed by the CPU 17, arid an external memory access section 27 for mounting the external memory 50 thereon and writing and reading the image data to and from the external memory 50. The respective components 11, 13, ..., of the imaging apparatus 10 are connected via a bus 20. The program 23a stored in the ROM 23 realizes the following functions of the imaging apparatus 10 in cooperation with the CPU 17.

The external memory 50 is constituted from non-volatile recording medium detachable to the imaging apparatus 10. The external memory 50 stores a plurality of image files 61 and print information 70 that is a specification relating to printing of those image files. The print information 70 together with the image files 61 is read from the external memory 50 by a printer (not shown), and analyzed, so that the image files 61 can be printed as specified by the print information 70.

### 2. Print Information

The print information 70 stored in the external memory 50 is described. The print information 70 includes an automatic print file (autoprint.mrk) 71, an XHTML-Print file 72, and so on.

The automatic print file 71 specifies information relating to printing of the image files 61 that is stored in the external memory 50 which stores the automatic print file 71. The information relating to printing includes, for example, number of prints, size, layout, and text simultaneously printed with an image, when printing the image files 61. Referring to the automatic print file 71 makes it possible to recognize print conditions of the image files 61 that is stored in the external memory 50 which stores the automatic print file 71.

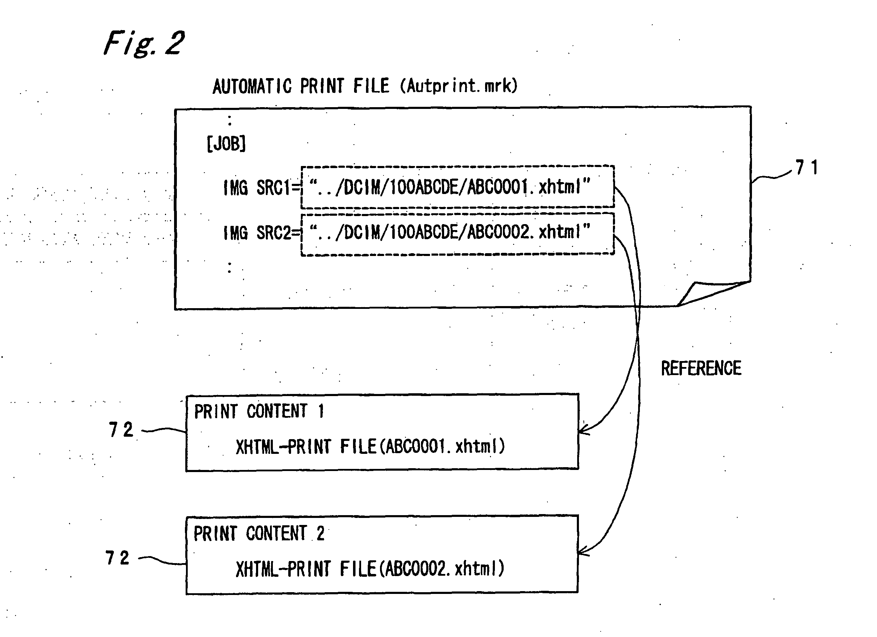

The automatic print file 71 specifies "print content" which is information relating to content of an image to be printed. Detailed configuration of the print content will be described later. A main part of the print content is described in an XHTML-Print file 72. The automatic print file 71 refers to the XHTML-Print file 72 as shown in Fig. 2. The XHTML-Print file 72 is a file for specifying detailed specifications of the image to be printed (print content specifying file) and described in an XHTML-Print language.

### (Print Content)

The print content specified by the automatic print file 71 include document structure information, style information (layout information), and image data.

The document structure information is information for defining a document structure such as print text data (text data), paragraphs, and linefeeds. The document structure information is described in the XHTML-Print file 72 using the XHTML-Print language.

The style information is information relating to the layout for specifying an expression manner (appearance) of text and image, such as a position and a size of the image data, a position of the printed text, font type, a size of characters in the text, and a method of indent or highlight. In the present embodiment, the style information is described in accordance with the cascading style sheet (CSS) format recommended by World Wide Web Consortium (W3C).

The style information and the image data may be directly described in the XHTML-Print file 72 or may be referenced as the external file by the XHTML-Print file 72. The different constitutions respectively have different merits depending on how the style information and the image data are handled in the XHTML-Print file 72, that is a difference in file structures of the print contents. The specific file configurations of the print contents will be described later.

The document structure information and the style information may be described in any language other than the XHTML-Print language as far as they are appropriately described.

### (Template)

In the present embodiment, some forms of the document structure information in accordance with predetermined events are prepared in advance as templates. The template is document structure information which is a source data used for generating the XHTML-Print file 72 for defining print content. In the present embodiment, the template is described as a XHTML-Print file, but it may be described in a different format. The template is held in the imaging apparatus 10 or the external memory 50.

Examples of the prepared templates include a Christmas card, a birthday card, a New Year's card and the like depending on the events. The use of such templates can alleviate user's labor in generating an image to be printed.

Items described in the template include variable items and fixed items. The variable item has changeable content. For example, a file name of an external file to be referenced is replaced, or the variable item is replaced with a text input from the imaging apparatus 10. The variable item of the template is replaced with a desired text to generate the XHTML-Print file of the print contents. The variable item includes the followings:
- text input by the user via the operating section 13 of the imaging apparatus 10 (name, comments and the like of a person who provides print materials);
- attribute information of the image file (information contained in a header of an EXIF file, such as date and time, place and conditions (F value, shutter speed, and the like); and
- device information of the imaging apparatus (model name and the like)

In contrast, the fixed item which cannot be rewritten includes, for example, a text relating to a subject of content (such as "Merry X'mas!" in the Christmas card, etc.).

### (Template List and Style Sheet List)

The imaging apparatus 10 or the external memory 50 probably may store a plurality of templates and style sheets. In this case, it is convenient for a user to know available templates and style sheets. Therefore, according to the present embodiment, the imaging apparatus 10 or the external memory 50 holds a list of the templates and a list of the style sheets. Tables 1 and 2 respectively show examples of the list of the templates and the list of the style sheets.

**[Table 1] Template List**

| Template | Description |
|---|---|
| ../default.html | Default |
| ../xmas.html | Christmas Card |
| ../birthday.html | Birthday Card |
| ../condition.html | Photographing Conditions |
| ../.../xHTML/ABCDE/tmpl/*.html | External Template |
| | |

**[Table 2] Style Sheet List**

| Style Sheet | Description |
|---|---|
| ../women.css | For Lady (Century) |
| ../men.css | For Gentleman (Gothic) |
| ../kids.css | For Kids (Arial) |
| ../.../xHTML/ABCDE/tnpl/*.css | External Style Sheet |
| | |

As shown in Table 1, the template list is information relating to listed templates and includes description for each template. As shown in Table 2, the style sheet list is information relating to listed style sheets and includes description for each style sheet.

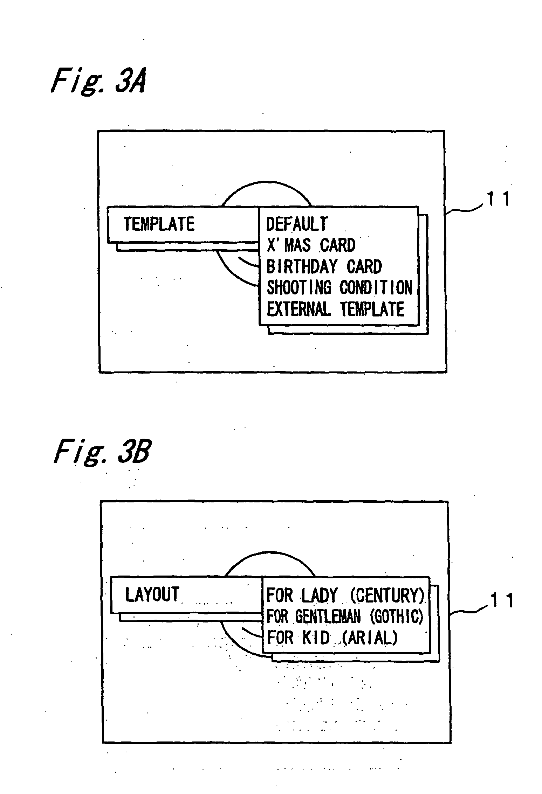

The style sheet list and the template list are referenced in the printing setting operation performed by the user on the imaging apparatus 10, and the respective descriptions are displayed on the display device 11. For example, the description of the template list is displayed on the display device 11 as shown in Fig. 3A. The user refers to the descriptions of the templates displayed on the display device 11 to thereby grasp contents of the templates and select a desired template. Fig. 3B shows an exemplified display of descriptions of the style sheet list. The user refers to the descriptions of the style sheets displayed on the display device 11 to thereby grasp contents of the style sheets and select a desired style sheet.

The style sheets, templates, the template list, and the style sheet list may be stored in the ROM 23 of the imaging apparatus 10 in the form of files, or may be incorporated into the program 23a as a part thereof. When one style sheet and one template exist only, it is unnecessary to prepare the template list and the style sheet list. When file names of the style sheets and the templates are made in such manner that the contents thereof can be easily known, the descriptions of the template list and the style sheet list may not be necessarily displayed.

### (Specific Example of Description of XHTML-Print file)

Table 3 shows a specific example of the description of the XHTML-Print file 72. In the following example, the style information is written in the XHTML-Print file 72, and eight image files are referenced as external files.

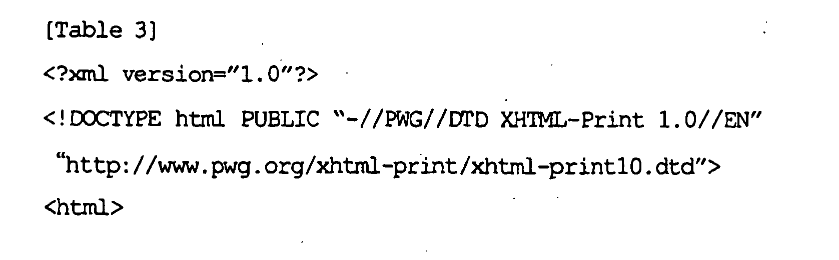

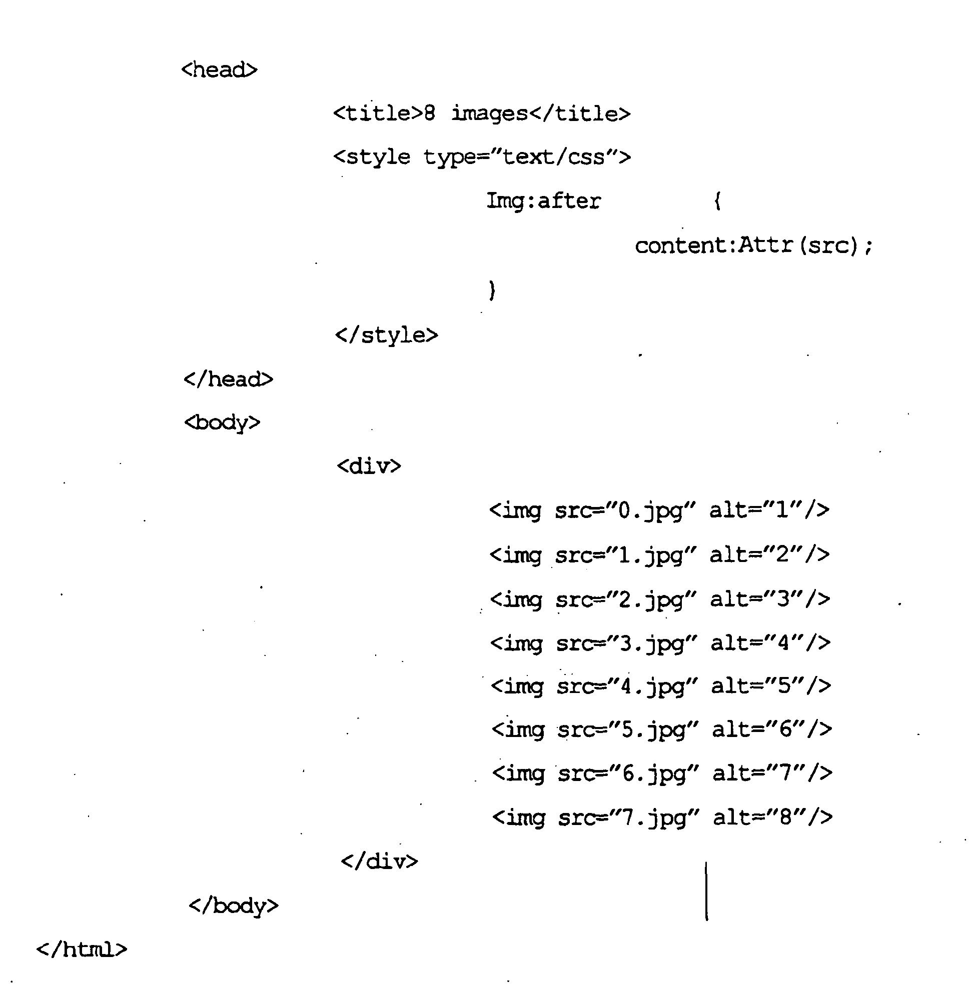

The foregoing description example is explained below.
<?xml version="1.0"?> is an declaration of a version of XML used in the foregoing files.
<!DOCTYPE html PUBLIC "-//PWG//DTD XHTML-Print 1.0//EN" "http://www.pwg.org/xhtml-print/xhtml-print10.dtd"> declares that a type of the document is "http://www.pwg.org/xhtml-print/xhtml-print10.dtd (that is XHTML-Print)".

The style information (layout information) is defined in a HEAD element by <style type="text/css"> ... </style>. In the present example, a layout to be used is defined after an img element.

The document structure is described in <body> ... </body>. In the present example, eight img elements (image data) are defined in block elements of div elements (for grouping block-level elements).

The image data and the style information may be directly described in the XHTML-Print file 72 or may be referenced as external files as described earlier.

### 3. File Structure of Print Content

Four types A to D as examples of a file structure of the print content are described below.

### (Type A)

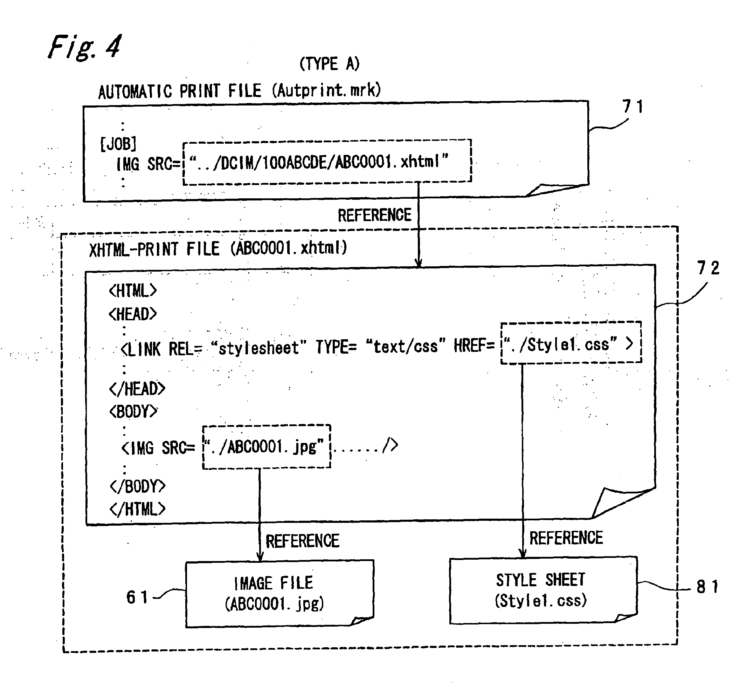

Fig. 4 shows a first example (type A) of the file structure of the print content. In the type A, the XHTML-Print file 72 refers to the external files for the style information and the image data. Regarding the style information, an external file (hereinafter, called "style sheet") 81 describing a content thereof is referenced. In other words, the print content includes XHTML-Print file, image file (image data), and style sheet.

Advantages of the type A include the followings. Referring to the external file as the style information allows the print layout information to be shared between print contents. In particular, the printing layout information can be more advantageously shared in terms of a memory capacity, as the number of the print contents is increased. Further, the layouts of more than one print contents can be simultaneously changed, which reduces the processing.

If a full path (directory + file name) of the style sheet file referenced by the XHTML-Print file 72 is known, the style sheet can be changed by another host apparatus. In the case of an apparatus with a communication function, the external style sheet can be advantageously input from outside of the apparatus through the communication.

The reference to the external file for the image data provides such an advantage that one image file can be shared by more than one print contents and that the XHTML-Print file 72 can be downsized.

### (Type B)

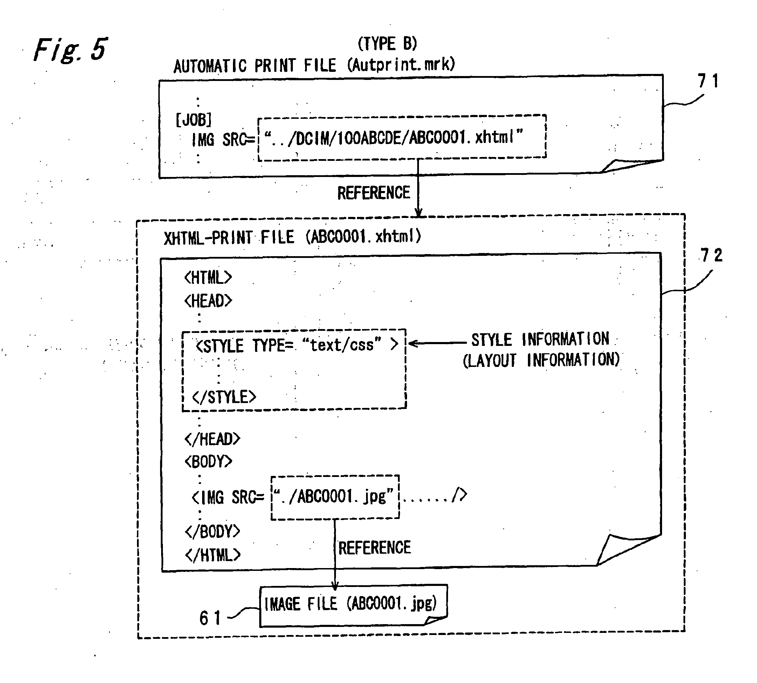

Fig. 5 shows a second example (type B) of the file structure of the print content. In the type B, the style information is written in the XHTML-Print file 72, and the external file is referenced for the image data. That is, the print content includes the XHTML-Print file and the image file.

Below are mentioned advantages of the type B. Because the style information is written in the XHTML-Print file 72, the document structure information and the print layout information can be combined into one, facilitating management of file. The reference to the external file for the image data provides such an advantage that one image file can be shared by more than one print contents, and that the XHTML-Print file 72 can be downsized.

### (Type C)

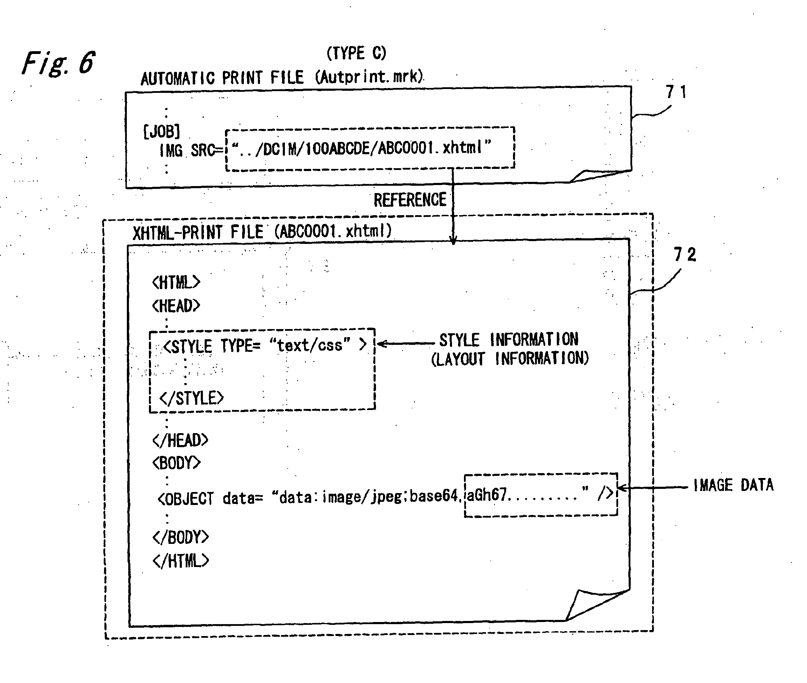

Fig. 6 shows a third example (type C) of the file structure of the print content. In the type C, there is no reference to the external file. The style information is written in the XHTML-Print file 72. The image data is also written in the XHTML-Print file 72 after applying a process of in-line imaging to the image data. That is, the print content only includes the XHTML-Print file.

An advantage of the type C is in that since there is only one file relating to the print content because it is unnecessary to refer to the external file. As a result, the file management and the exchange of the print content are more conveniently carried out in comparison to the other examples.

### (Type D)

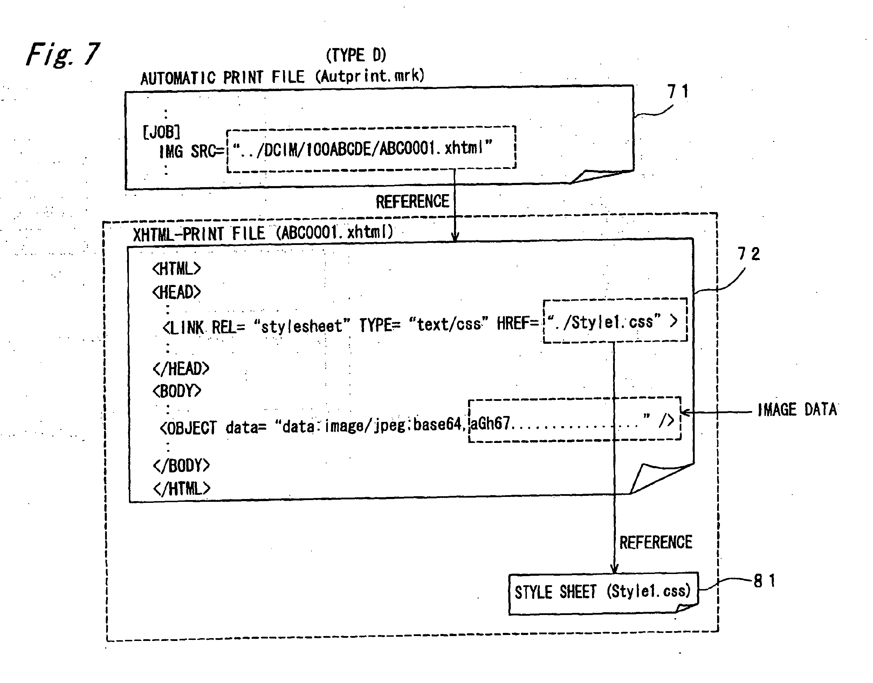

Fig. 7 shows a fourth example (type D) of the file structure of the print content. In the type D, the external file is referenced for the style information, and the image data is written in the XHTML-Print file 72 after in-line imaging process of the image data. That is, the print content includes the XHTML-Print file and the style sheet.

The type D is advantageous in that the external file is referred to for the style information so that the print layout information can be shared between the print contents. In particular, the print layout information can be more advantageously shared in terms of the memory capacity as the number of the print contents is increased. Further, the layouts of more than one print contents can be simultaneously changed, thus to reduce load of the processing.

If the full path (directory + file name) of the style sheet file referenced by the XHTML-Print file 72 is known, the style sheet can be changed by another host apparatus. In the case of the apparatus including the communication function, the external style sheet can be advantageously retrieved from outside of the apparatus through the communication.

### 4. Directory Structure

As described above, four types of the file structure of the print contents are described. The print content (XHTML-Print file 72) is stored in the external memory 50 together with image files. Directory structures in the external memory 50 capable of storing any one of the four types of print contents described above are described with four examples of patterns 1 to 4.

### (Pattern 1)

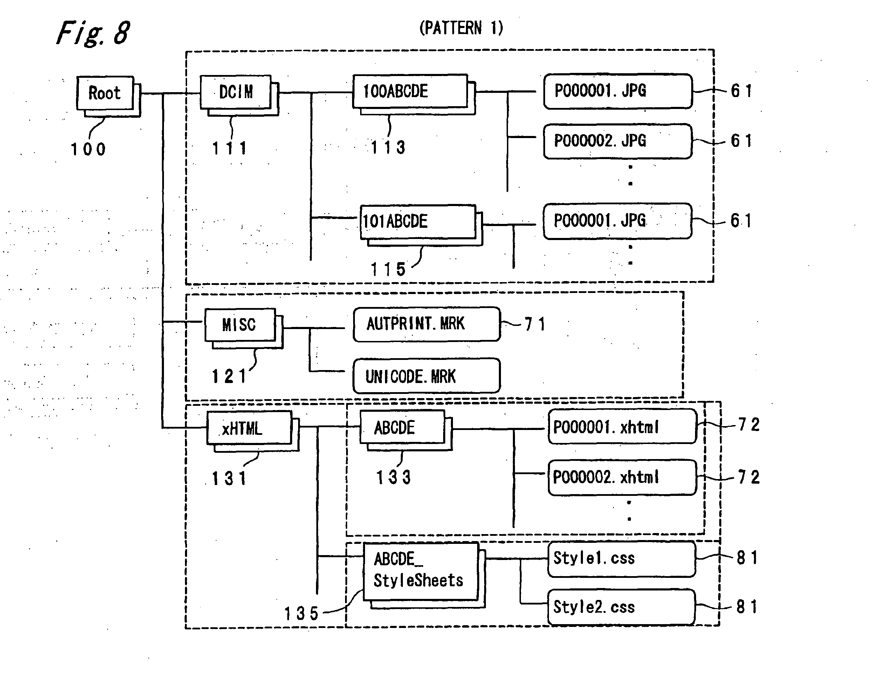

Fig. 8 shows a directory structure of the pattern 1. As shown in the drawing, a DCIM directory 111, an MISC directory 121 and an xHTML directory 131 are provided under a root directory 100.

The DCIM directory 111 is a directory in which the image files are stored. The DCIM directory is generated in compliance with DCF (Design Rule for Camera File System) Standards. The MISC directory 121 stores a DPOF file (automatic print file, Unicode text description file (Unicode.mrk) and the like).

The xHTML directory 131 is a directory in which the print contents other than the image data are stored. More specifically, the xHTML directory 131 stores HTML-Print file 72 and style sheet 81 referenced by the HTML-Print file 72. To be more specific, a directory ("ABCDE directory") 133 for storing the HTML-Print file 72 and a directory ("ABCDE_StyleSheets directory") 135 for storing the style sheet 81 are provided under the xHTML directory 131.

As described, in the pattern 1, the directory exclusively used for the print contents is provided under the root directory 100, and the HTML-Print file and the style sheet referenced thereby are stored in the exclusive directory. Such a configuration allows the style sheet to be shared between the print contents. As another advantage, the configuration does not provide any influence on the directory for storing the image (DCIM directory) in compliance with conventional DCF Standards.

The directories are preferably named as follows. According to the DCF Standards, the sub directory disposed immediately below the DCIM directory is named in such manner that first three digits have to be serial numbers and five digits thereafter can be provided with optional numbers by a manufacturer of the digital camera. In other words, the last five digits of the directory name are unique to the manufacturer. Then, the names of sub directories immediately below the xHTML directory 131 are preferably decided so as to correspond to or include the last five digits of the sub directories 113 and 115 disposed immediately below the DCIM directory 111. In the example shown in Fig. 8, the last digits of the names of the sub directories disposed immediately below the DCIM directory 111 are "ABCDE". Therefore, the names of the sub directories 133 and 135 disposed immediately below the xHTML directory 131 are arranged to include the text, "ABCDE". When the names of the directories are thus decided, the manufacturer of the apparatus having generated the directories can be identified, convenience of file management can be improved.

### (Pattern 2)

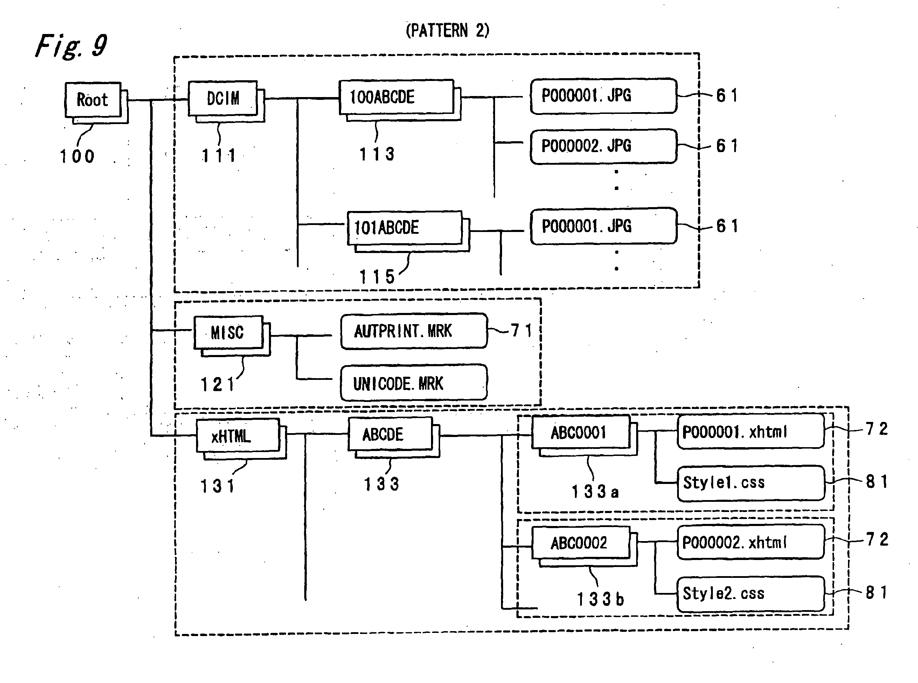

Fig. 9 shows a directory structure of the pattern 2. As shown in the drawing, the DCIM directory 111, the MISC directory 121 and the xHTML directory 131 are provided under the root directory 100 in the same manner as in the pattern 1. Differences from the pattern 1 is in that a directory is provided for each of print contents under the xHTML directory 131, and the XHTML-Print file 72 and the style sheet relating to the print content are stored in the provided directory. In the example shown in Fig. 9, an ABCDE directory 133 is provided under the xHTML directory 131, and an ABC0001 directory 133a and an ABC0002 directory 133b are further provided under the ABCDE directory 133. The ABC 0001 directory 133a and the ABC0002 directory 133b are respectively provided for the different print contents, and store the XHTML-Print file 72 and the style sheet of the respective print contents.

As described, in the pattern 2, the directories are provided for the respective print contents under the directory (xHTML directory 131) exclusively used for print contents, and the XHTML-Print file 72 and the style sheet are stored in the respective directories. Thus, the relationship between the XHTML-Print file and the style sheet can be easily known, and the file management can be facilitated. Further, because the XHTML-Print file 72 and the style sheet are present in the same directory, a reference URI (Uniform Resource Identifier) can be more easily described in the XHTML-Print file 72. In the same manner as in the pattern 1, no influence is generated on the directory (DCIM directory) for storing the image in compliance with the conventional DCF Standards.

In the present example, in the same manner as in the pattern 1, the names of the sub directories immediately below the xHTML directory 131 are preferably decided so as to correspond to or include the last five digits of the names of the sub directories 113 and 115.

### (Pattern 3)

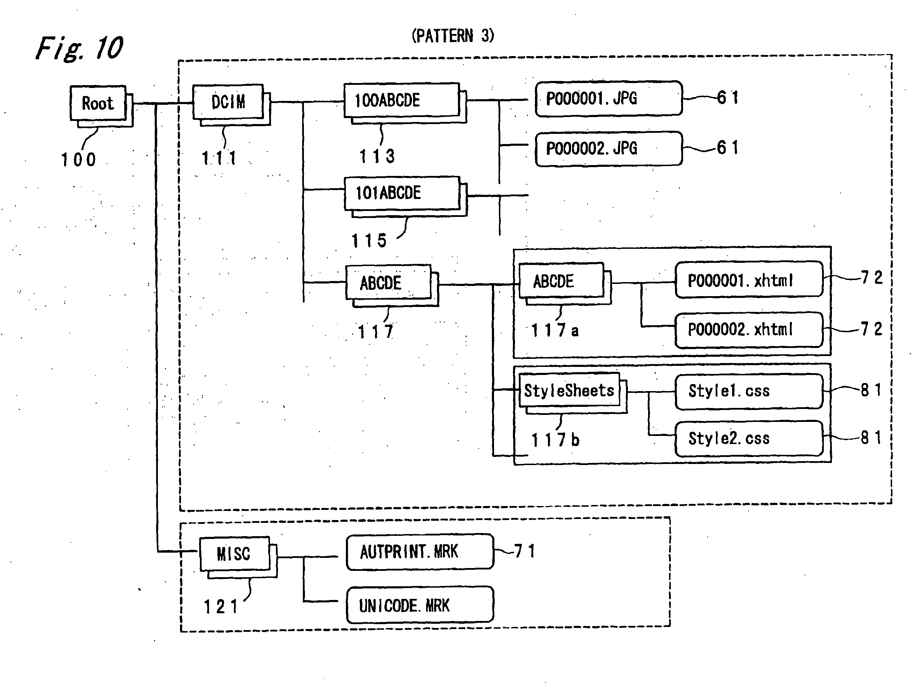

Fig. 10 shows a directory structure of the pattern 3. As shown in the drawing, the DCIM directory 111 and the MISC directory 121 are provided under the root directory 100.

Particularly, in the pattern 3, an ABCDE directory 117 is provided in the DCIM directory 111 as a directory for storing the print contents. "ABCDE" of the name of the directory 117 corresponds to the five-digit texts which are unique to the manufacturer in the DCIM directory. The ABCED directory 117 stores the print content except for the image data. A directory ("ABCDE directory") 117a for storing the HTML-Print file 72 and a directory ("ABCED_Style Sheets directory") for storing the style sheet 81 are respectively provided under the ABCED directory 117.

According to such a directory structure, the style sheet can be shared between the print contents. Further, the image file and the print contents are both stored under the DCIM directory, which facilitates the file management.

### (Pattern 4)

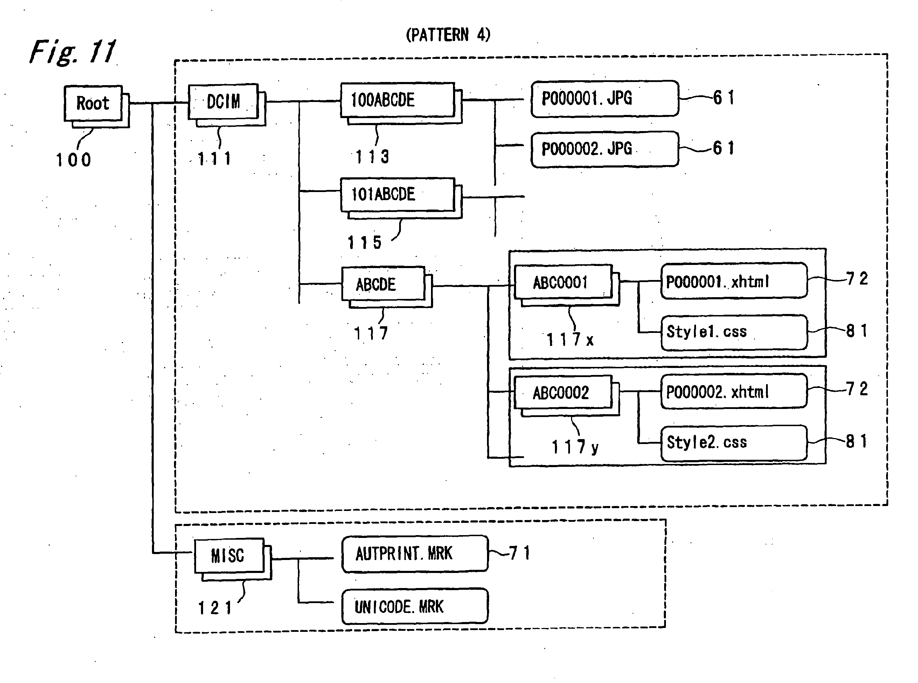

Fig. 11 shows a directory structure of the pattern 4. As shown in the drawing, the DCIM directory 111 and the MISC directory 121 are provided under the root directory 100.

In the pattern 4, in the same manner as in the pattern 3, the ABCDE directory 117 is provided in the DCIM directory 111 as a directory for storing print content. However, the ABCDE directory 117 is differently configured from the pattern 3 in that a sub directory is provided for each of print contents under the ABCDE directory 133 in the same manner as in the pattern 2. In the example shown in Fig. 11, an ABC0001 directory 117x and an ABC0002 directory 117y for respectively storing the XHTML-Print files 72 and the style sheets of the different print contents are provided.

According to the foregoing configuration, the relationship between the XHTML-Print file 72 and the style sheet can be easily grasped, and the file management can be facilitated. Further, it becomes easier to describe the reference URI in the XHTML-Print file 72 because the XHTML-Print file 72 and the style sheet are present in the same directory. Further, the file management can be facilitated because all of the image files and print contents are stored under the DCIM directory.

### 5. Operations of Generation and Writing of Automatic Print File and XHTML-Print File

Below are described the generation of the automat print file 71 and the XHTML-Print file 72 and the write operation with respect to the external memory 50 executed by the imaging apparatus 10.

### 5-1. Case in which Style Sheets and Templates are Stored in ROM

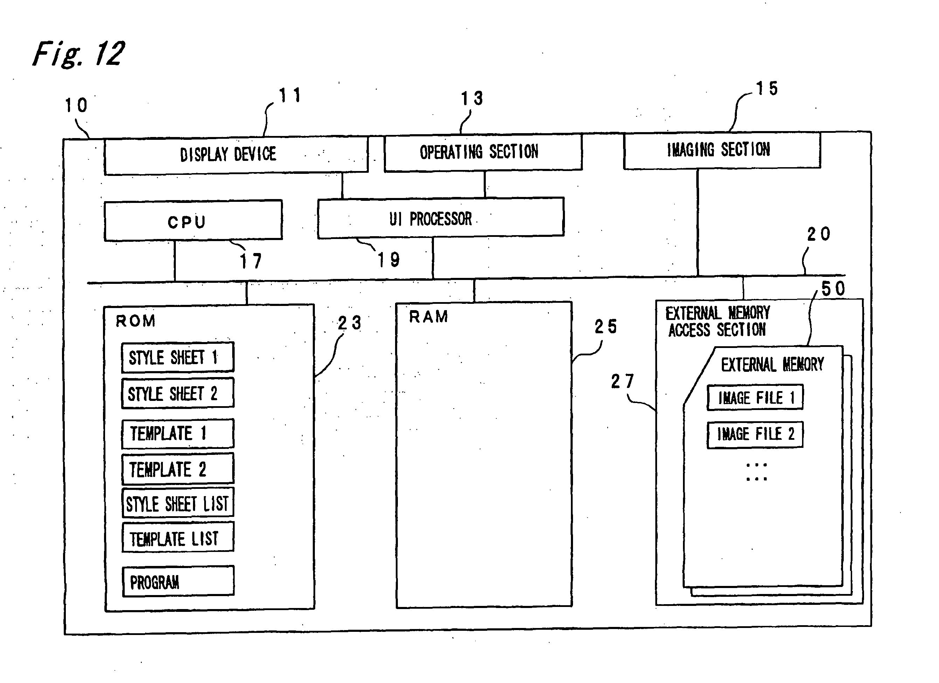

First, as shown in Fig. 12, the processing in the case where the style sheets and the templates are stored in the ROM 23 of the imaging apparatus 10 is described for each type of the file structures of the print contents.

### (Type A)

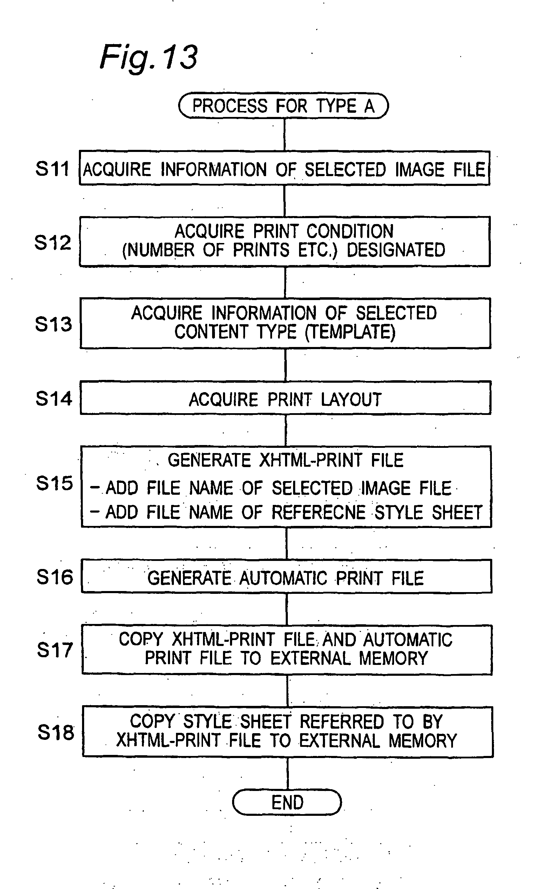

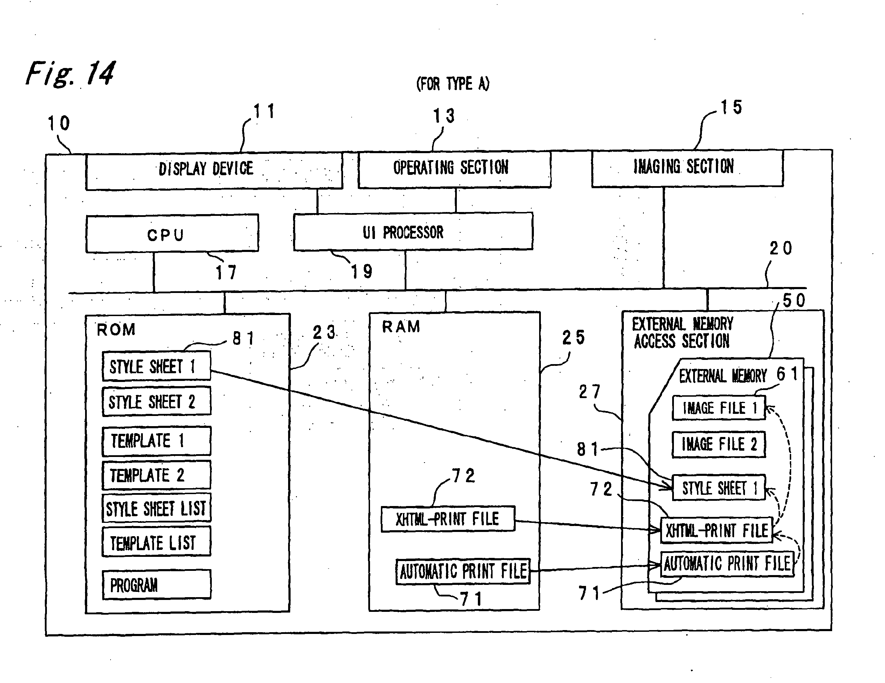

Referring to Figs. 13 and 14, processes for generation and writing of the print content are described when the file structure of the print content (XHTNIL-Print file 72) is the type A.

When the print information of the image file 61 recorded in the external memory 50 is set using the imaging apparatus 10, the user selects images to be printed on the operating section 13 of the imaging apparatus 10. Then, the user designates the print condition such as the number of prints and print size. Further, the user designates content type and printing layout. When designating the content type, descriptions of the template list are displayed on the display device 11 of the imaging apparatus 10 as shown in Fig. 3A. The user can select content type (that is, template) referring to the shown descriptions. For example, the user can select the type of content such as the Christmas card or birthday card. Further, when designating the printing layout, descriptions of the style sheets are displayed on the display device 11 of the imaging apparatus 10 as shown in Fig. 3B. Then, the user can designate the printing layout (select a style sheet) referring to the shown description.

As shown in Fig. 13, after the foregoing operation by the user is completed, the CPU 17 acquires information of image files, print condition, information on content type (template) and information on printing layout, those selected or designated by the user from the operating section 13 (S11 to S14).

Thereafter, the text is appropriately replaced in the variable items in the template corresponding to the selected content type to generate the XHTML-Print file 72 (S15). At that time, the file name of the referenced image file in the variable items of the template is replaced with the file name of the selected image file. Further, the file name of the referenced style sheet in the variable items is replaced with the file name of the style sheet corresponding to the selected printing layout. The generated XHTML-Print file 72 is temporarily stored in the RAM 25.

Next, the automatic print file 71 is generated based on the designated print condition (S16). The generated automatic print file 71 is temporarily stored on the RAM 25.

The generated automatic print file 71 and the XHTML-Print file 72 are copied to the external memory 50 as shown in Fig. 14 (S17). Further, the style sheet 81 referenced in the XHTML-Print file 72 is copied to the external memory 50 (S18), and the processing is terminated.

### (Type B)

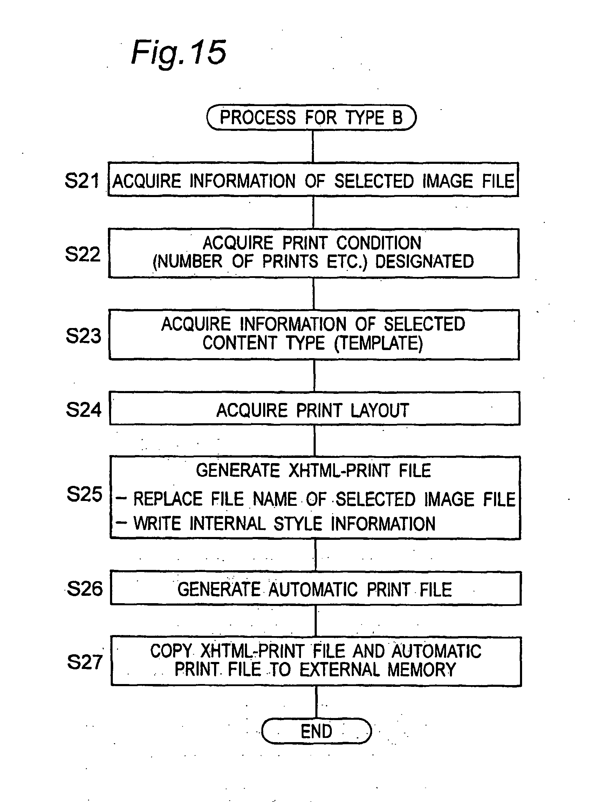

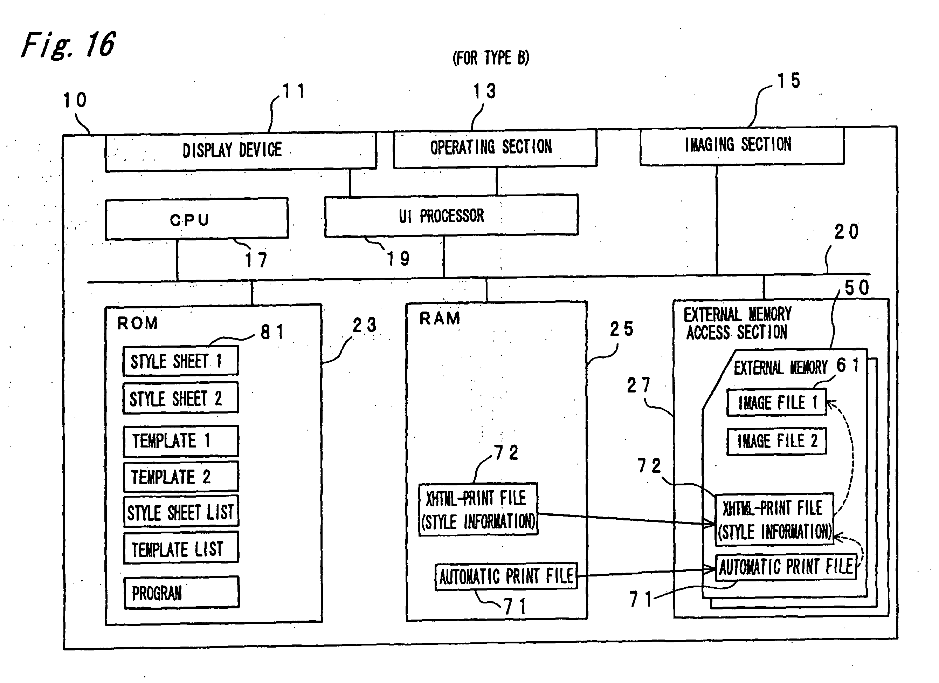

Referring to Figs. 15 and 16, processes for generation and writing of the print content are described when the file structure of the print content (XHTML-Print file 72) is the type B.

As shown in Fig. 15, first, the CPU 17 acquires information of image file, print condition, information on the content type (template) and information on the printing layout, those selected or designated by the user from the operating section 13 (S21 to S24).

Thereafter, the XHTML-Print file 72 is generated based on the template corresponding to the selected content type (S25). At that time, the file name of the reference image file in the variable items of the template is replaced with the file name of the selected image file. Further, content of the style sheet corresponding to the selected printing layout is written in XHTML-Print file 72, as internal style information (content of style element) in the template. The generated XHTML-Print file 72 is temporarily stored in the RAM 25.

Next, the automatic print file 71 is generated based on the designated print condition (S26). The generated automatic print file 71 is temporarily stored in the RAM 25.

The generated automatic print file 71 and the XHTML-Print file 72 are copied to the external memory 50 as shown in Fig. 16 (S27), and the processing is terminated.

### (Type C)

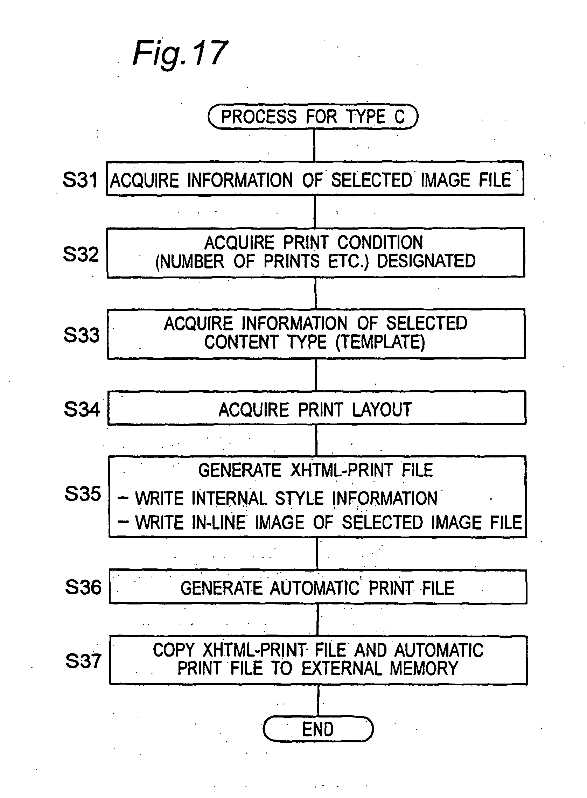

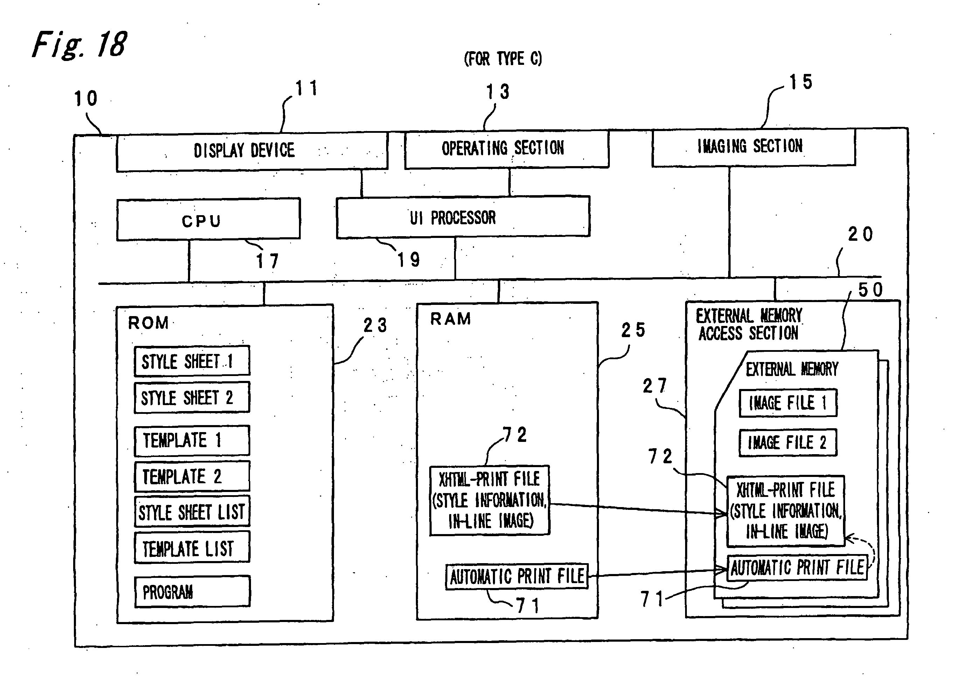

Referring to Figs. 17 and 18, processes for generation and writing of the print content are described when the file structure of the print content (XHTML-Print file 72) is the type C.

As shown in Fig. 17, first, the CPU 17 acquires the information of the image file, printing conditions, information on the type of the contents (template) and information on the printing layout, those selected or designated by the user (S31 to S34).

Thereafter, the XHTML-Print file 72 is generated based on the template corresponding to the selected content type (S35). At that time, content of the style sheet corresponding to the selected printing layout is written in XHTML-print file 72, as internal style information (content of style element) in the template. The data of the selected image file is subjected to in-line imaging process and is written as the image file data (img element) in the template. The generated XHTML-Print file 72 is temporarily stored in the RAM 25.

Next, the automatic print file 71 is generated based on the designated print condition (S36). The generated automatic print file 71 is temporarily stored in the RAM 25.

The generated automatic print file 71 and the XHTML-Print file 72 are copied to the external memory 50 as shown in Fig. 18 (S37), and the processing is terminated.

### (Type D)

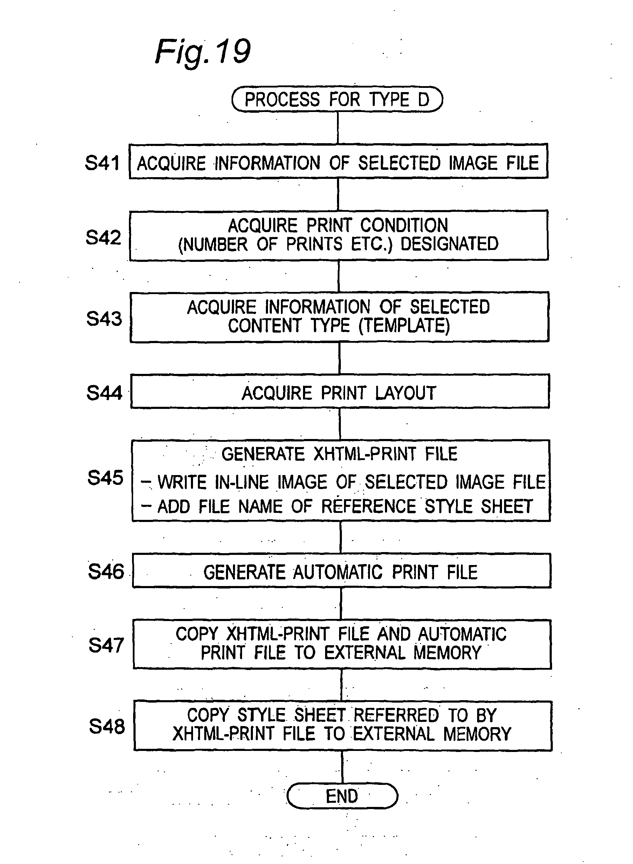

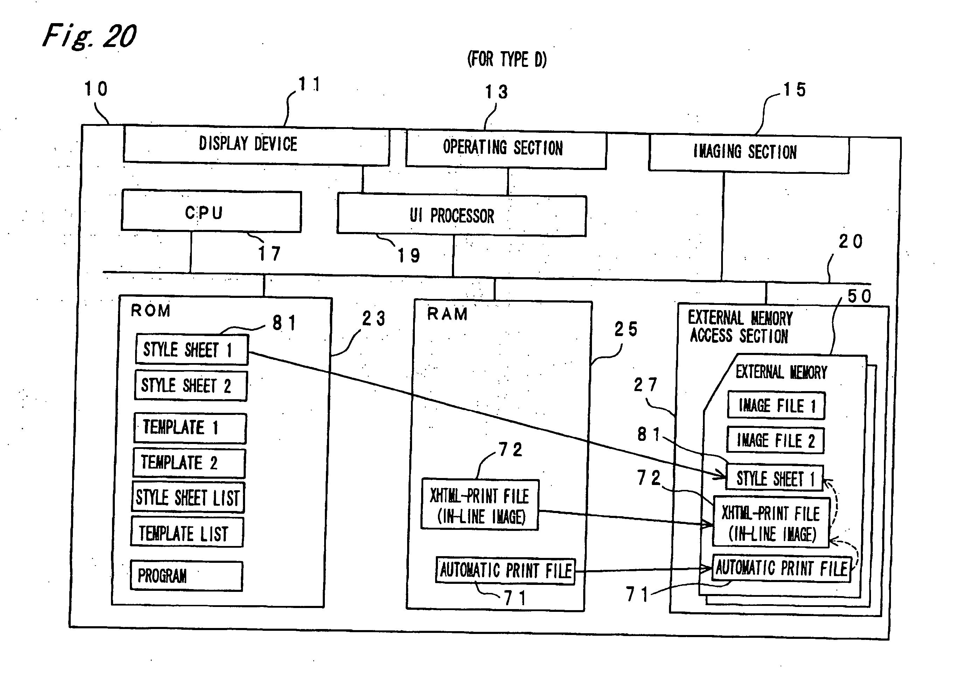

Referring to Figs. 19 and 20, processes for generation and writing of the print content are described when the file structure of the print content (XHTML-Print file 72) is the type D.

As shown in Fig. 19, first, the CPU 17 acquires information of image file, print condition, information on the content type (template) and information on the printing layout, those selected or designated by the user (S41 to S44).

Thereafter, the XHTML-Print file 72 is generated based on the template corresponding to the selected content type (S45). At that time, data of the selected image file is subjected to in-line imaging process and is written in XHTML-print file 72 as the image file data (img element) in the template. The file name of the referenced style sheet in the variable items is replaced with the file name of the style sheet corresponding to the selected printing layout. The generated XHTML-Print file 72 is temporarily stored in the RAM 25.

Next, the automatic print file 71 is generated based on the designated print condition (S46). The generated automatic print file 71 is temporarily stored in the RAM 25.

The generated automatic print file 71 and the XHTML-Print file 72 are copied to the external memory 50 as shown in Fig. 20 (S47). Further, the style sheet 81 referenced in the XHTML-Print file 72 is copied to the external memory 50 (S48), and the processing is terminated.

### 5-2. Case in which Style Sheets and Templates are Stored in External Memory

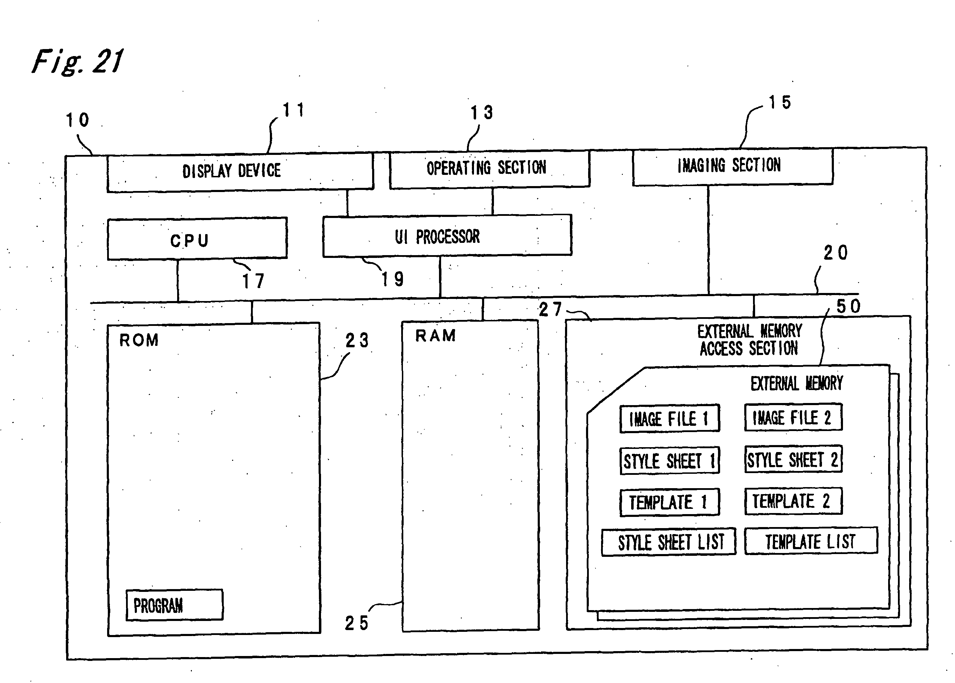

Next, as shown in Fig. 21, process in the case where a style sheet and a template are stored in the external memory 50 is described for each type of file structure of the print content. The style sheet list and the template list are also stored in the external memory 50.

The style sheets, templates, the style sheet list, and the template list may be written in the external memory 50 using another apparatus. Alternatively, a communication means may be provided in the imaging apparatus 10 so that the style sheets, templates, the style sheet list, and the template list stored in another apparatus are acquired via the communication means to be downloaded to the external memory 50.

### (Type A)

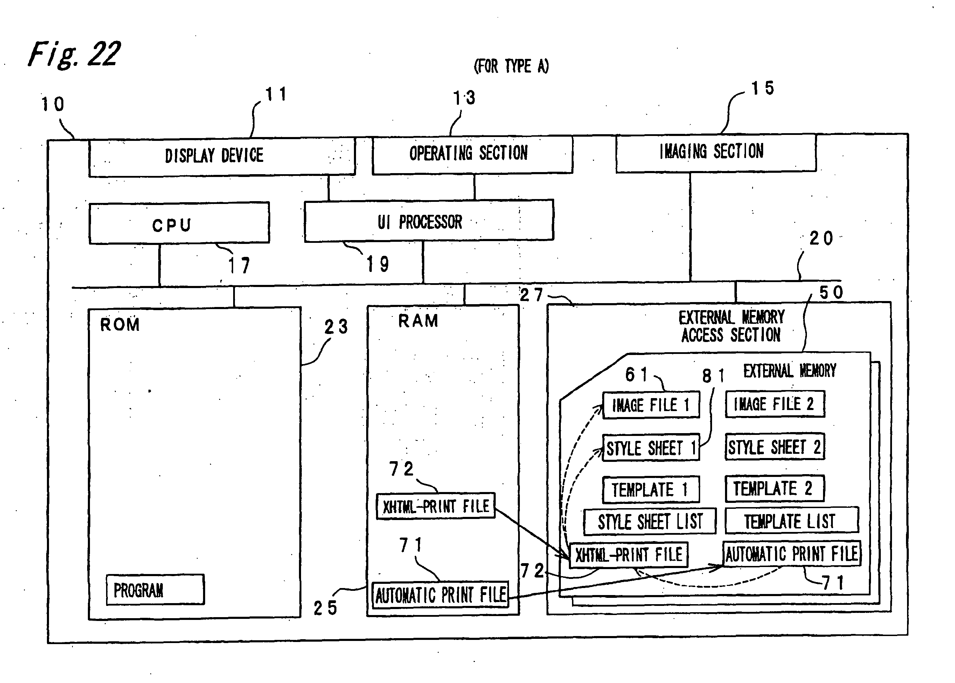

The process when the file structure of the print content (XHTML-Print file 72) is the type A is basically the same as the process shown in Fig. 13. However, in the present example, the style sheet 81 referenced in the XHTML-Print file 72 is already stored in the external memory 50 as shown in Fig. 22. Therefore, it becomes unnecessary to execute the Step S18 shown in Fig. 13 in which the style sheet is copied to the external memory 50.

### (Type B)

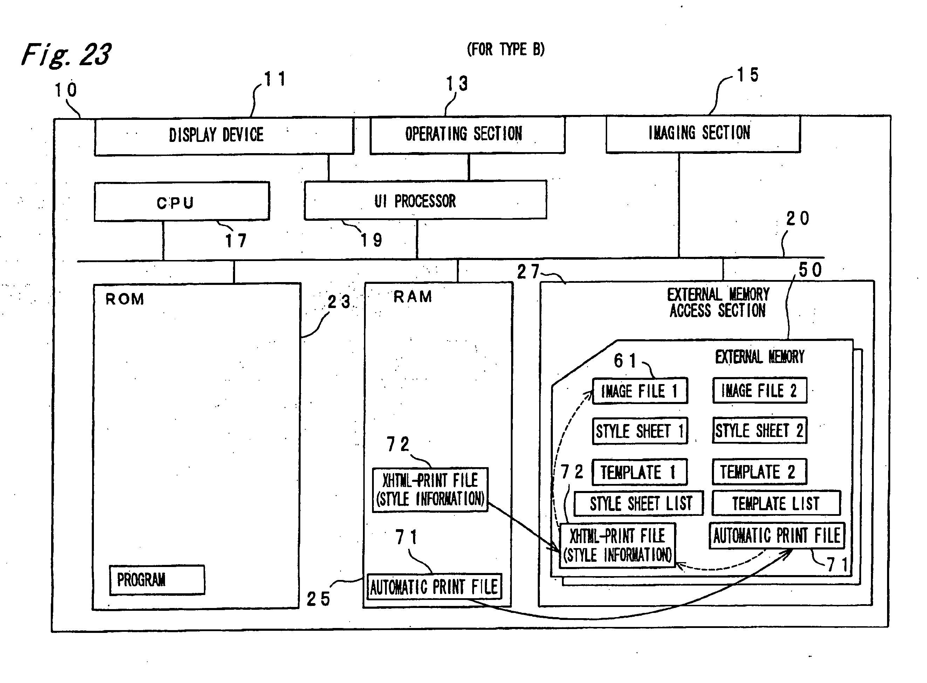

The process when the file structure of the print content (XHTML-Print file 72) is the type B is basically the same as the process shown in Fig. 15. However, only the automatic print file 71 and the XHTML-Print file 72 are copied to the external memory 50 as shown in Fig. 23.

### (Type C)

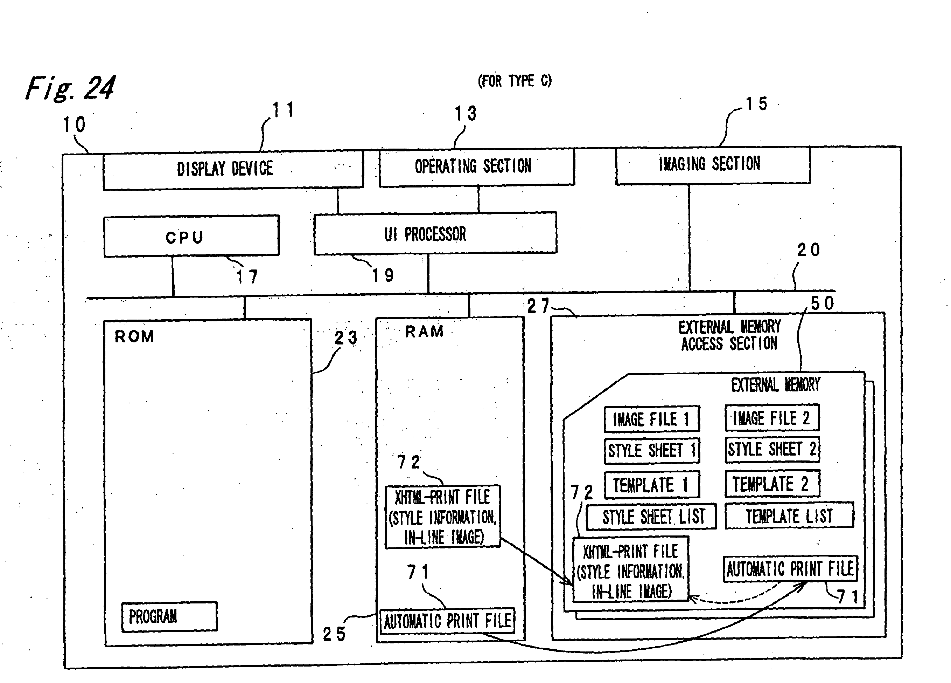

The process when the file structure of the print content (XHTML-Print file 72) is the type C is basically the same as the process shown in Fig. 17. However, only the automatic print file 71 and the XHTML-Print file 72 are copied to the external memory 50 as shown in Fig. 24.

### (Type D)

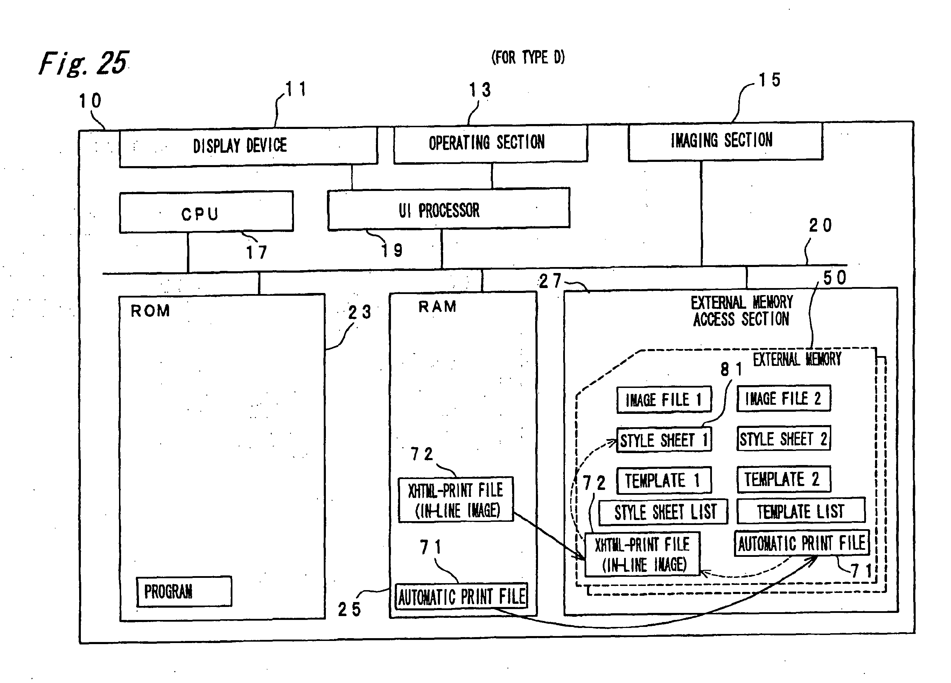

The process when the file structure of the print content (XHTML-Print file 72) is the type D is basically the same as the processing shown in Fig. 19. However, in the present example, the style sheet 81 referenced in the XHTML-Print file 72 is already stored in the external memory 50 as shown in Fig. 25. Therefore, it becomes unnecessary to execute the Step S48 shown in Fig. 19 in which the style sheet is copied to the external memory 50.

### 6. User Interface

As described, when the user sets the print information of the image file, various kinds of information is displayed on the display device 11 of the imaging apparatus 10. The user operates the operating section 13 while referring to the displayed information to select or designate template and content type. A process relating to the display for setting print information is described below.

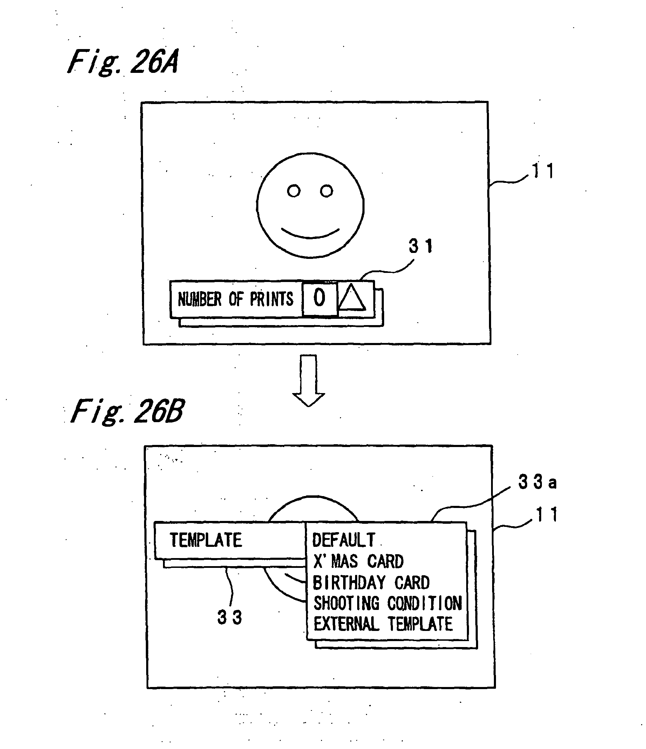

First, the user operates the operating section 13 to display, on the display device 11, an image to which the user wishes to set print information. At that time, the imaging apparatus 10 enters a print information setting mode when the user performs a predetermined operation on the operating section 13. When the imaging apparatus 10 entering the print information setting mode, first, number of prints designating box 31 is displayed as shown in Fig. 26A. The user designates number of prints (that is, printed copies of the image) in the number of prints designating box 31. When the number of prints is designated, the imaging apparatus 10 then enters a template designation sub mode.

In the template designation sub mode, the template list is referenced, and a description 33a of the template showing the content type is displayed as shown in Fig. 26B. In the absence of the template list, the file name of the template is displayed.

When selecting the template of which text to be printed can be edited, the imaging apparatus 10 enters a print subject designation sub mode, and a box for setting content to be edited is displayed. There are two methods of setting the contents to be edited.

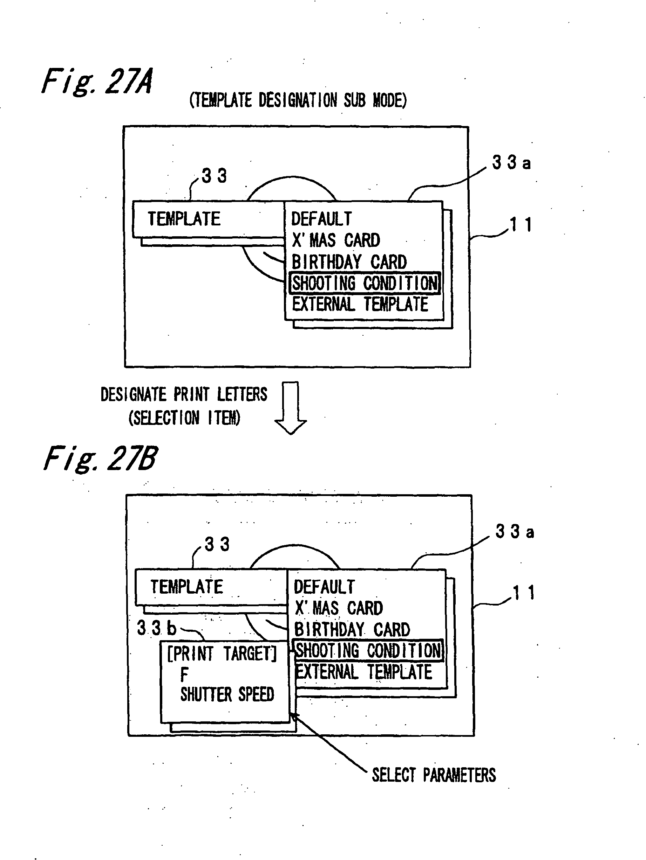

In one method, one or a plurality of items is/are selected from items prepared as printing subject. For example, if the template of "shooting condition" is a template of which text to be printed can be edited, upon selecting the template of "shooting condition" in a state shown in Fig. 27A, a menu 33b for selecting print subject parameters (F value, shutter speed and the like) is displayed as shown in Fig. 27B. The user can select the item which the user wishes to print, from the menu 33b.

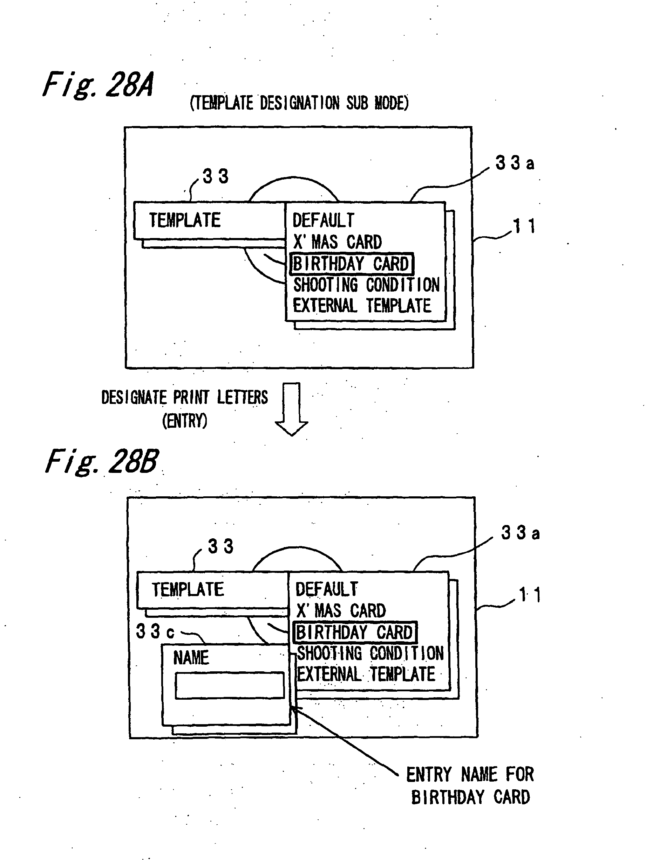

In the other method, the text that the user wishes to print is entered directory. For example, if the template of "birthday card" is a template of which text can be edited, upon selecting the template of "birthday card" in a state as shown in Fig. 28A, a menu 33c for entry of a name of a person having the birthday relating to the birthday card is displayed as shown in Fig. 28B. The user can entry the name of the person having the birthday on the menu 33c.

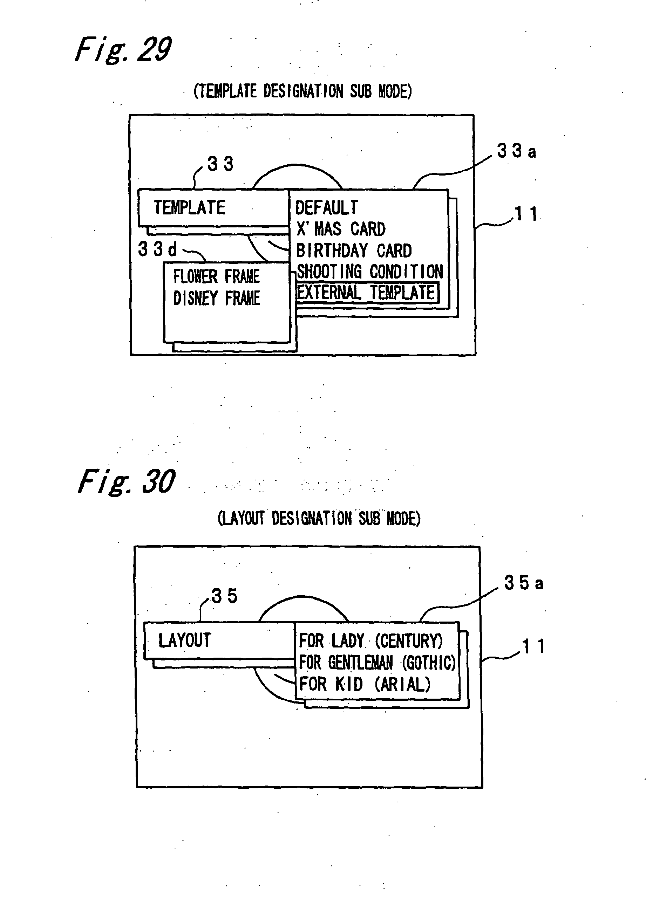

When the external template is selected in Fig. 26B, the template stored in the external memory 50 is displayed. For example, as shown in Fig. 29, a selection box 33d showing the templates stored in the external memory 50 is displayed. In the absence of the templates in the external memory 50, nothing is displayed on the selection box 33d. In case of the external template, the text to be printed is fixed. In some cases, ornament frame images stored in the external memory 50 may be referenced in place of the templates.

When the template designation sub mode is terminated, the imaging apparatus 10 enters a layout designation sub mode. In the layout designation sub mode, the style sheet list is referenced, and a box 35a including descriptions of style sheets is displayed as shown in Fig. 30. The user selects one of description in the box 35a and thereby can select the style sheet corresponding to the selected description. When the style sheet is selected, the layout such as a used font, form feed control and frame rendering method is designated.

As described, the predetermined items for selection are serially displayed on the display device 11 of the imaging apparatus 10, and user selects according to the display to set the print information.

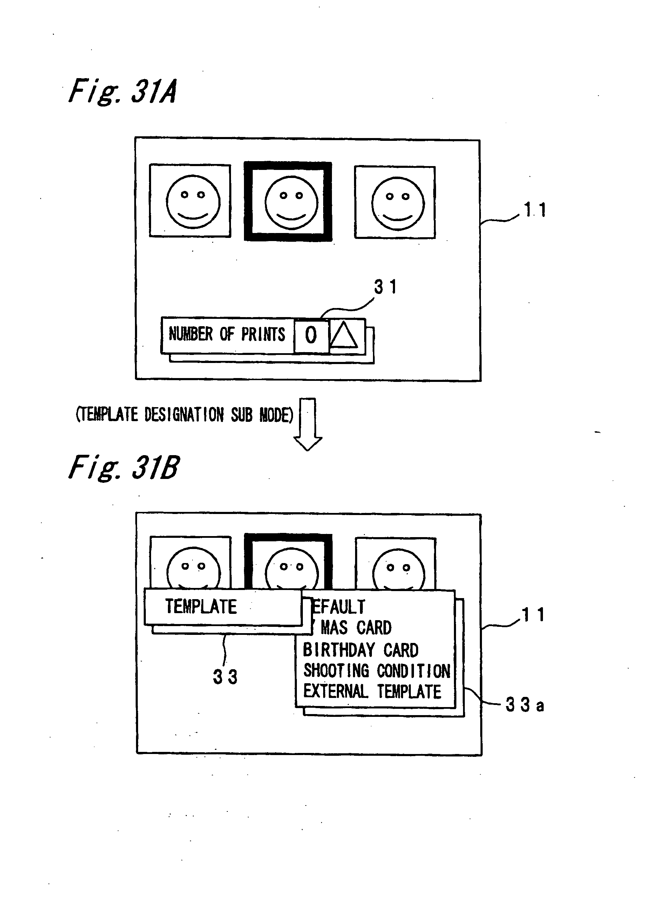

In the description above, as shown in Fig. 26, while one image is displayed, the user performs the predetermined operation on the operating section 11 to make the imaging apparatus 10 start a print information designating mode. However, as shown in Fig. 31, a plurality of images may be displayed first, and then the imaging apparatus 10 may start the print information designating mode after one image is selected from the plurality of displayed images.

As described, according to the present embodiment, the print information is specified using the document structure information and the style information. Thus, for the image to be printed, hot only the image but also the optional text information can be specified. Further, layout of the images can be optionally set in the print information. Further, the print information is defined in such manner that the information of the printed image and the style information are referenced via the external file so that the information can be easily edited and replaced.

The idea of the present invention can be applied to an imaging apparatus other than the digital camera, for example, mobile apparatuses such as a mobile telephone and PDA. The idea of the present invention can also be applied in the case of using video apparatuses such as a television and a projector in place of the printer.

The present invention can be applied to a recording medium for storing print information together with image data and an imaging apparatus for recording data on the recording medium such as a digital camera.

Although the present invention has been described in connection with specified embodiments thereof, many other modifications, corrections and applications are apparent to those skilled in the art. Therefore, the present invention is not limited by the disclosure provided herein but limited only to the scope of the appended claims. The present disclosure relates to subject matter contained in Japanese Patent Application No. 2004-334836, filed on November 18, 2004.

## Claims

1. A recording apparatus for generating at least print information (70) for defining specification for printing of image data, and recording the print information (70) to a recording medium, comprising:
an access section adapted to mount and access the recording medium; and
a control section adapted to control the recording of the print information (70) to the recording medium mounted on the access device,
wherein the control section is adapted to generate as the print information (70) a print content specifying file for defining detailed specification for printing of image data and to record the generated print content specifying file to the recording medium, wherein
the print content specifying file includes at least information specifying image data to be printed and document structure information for defining structure of document, **characterized in that** the control section is further adapted to generate as the print information (70) an automatic print file (71) including information designating the print content specifying file and to record the automatic print file (71) to the recording medium, wherein
the print content specifying file further includes information designating an external file which describes specifically at least a part of the specification.

2. The recording apparatus according to claim 1, wherein the control section is adapted to generate as the print information (70) the print content specifying file designating the external file, wherein the external file is a file that includes information defining the layout of the images to be printed.

3. The recording apparatus according to claim 1, wherein the information included in the external file specifies at least one of a position of the image data to be printed, a size of the image data to be printed, a position of text to be printed, font type of characters in the text, and a size of characters in the text.

4. The recording apparatus according to claim 1, wherein the print content specifying file includes information designating an external file which includes the image data to be printed, as the information specifying image data to be printed.

5. The recording apparatus according to claim 1, wherein the control section is adapted to record the print information in the recording medium which has a first directory for storing image data and a second directory including at least a directory for storing at least the print content specifying file.

6. The recording apparatus according to claim 1, wherein the print content specifying file further includes information designating style information which defines the layout of the images to be printed.

7. The recording apparatus according to claim 6, wherein the control section is adapted to record the print information in the recording medium which has a first directory for storing image data and a second directory including at least a directory for storing at least the print content specifying file.

8. The recording apparatus according to claim 7, wherein the second directory further includes a directory for storing a file related to the style information which is designated by the information designating style information.

9. The recording apparatus according to claim 6, wherein the control section is adapted to record the print information in the recording medium which has a first directory for storing image data and a second directory including at least a directory for storing at least the print content specifying file, and
a directory for storing the print content specifying file and a file related to the style information which is designated by the information designating style information is provided under the second directory for each print content specifying file.

10. The recording apparatus according to claim 1, wherein the print content specifying file is described in an XHTML-Print language.

11. A recording method for generating at least print information (70) defining specification for printing of image data, and recording the print information (70) to a recording medium, comprising the steps of:
generating a print content specifying file for defining detailed specification for printing of image data, as the print information (70); and
recording the generated print content specifying file to the recording medium, and
wherein the print content specifying file includes at least information specifying at least image data to be printed and document structure information for defining structure of document,
**characterized in that**
the step of generating a print content specifying file comprises generating an automatic print file (71) including information designating the print content specifying file as the print information (70); and
the step of recording the generated print content specifying file also includes recording the automatic print file (71) to the recording medium, wherein
the print content specifying file further includes information designating an external file which describes specifically at least a part of the specification.

12. A recording medium storing at least print information (70) for defining specification for printing of image data, comprising, as the print information (70),
a print content specifying file for defining detailed specification for printing of image data,
wherein the print content specifying file includes at least information specifying image data to be printed and document structure information for defining structure of document, **characterized by**
an automatic print file (71) including information designating the print content specifying file, wherein
the print content specifying file further includes information designating an external file which describes specifically at least a part of the specification.

## Patentansprüche

1. Aufzeichnungsvorrichtung zum Erzeugen von wenigstens Druckinformation (70) zum Definieren einer Spezifikation zum Drucken von Bilddaten und zum Aufzeichnen der Druckinformation (70) auf ein Aufzeichnungsmedium, mit:
einem Zugriffsabschnitt, der ausgestaltet ist, das Aufzeichnungsmedium aufzunehmen und darauf zuzugreifen, und
einen Steuerabschnitt, der ausgestaltet ist, das Aufzeichnen der Druckinformation (70) auf das Aufzeichnungsmedium zu steuern, das von der Zugriffsvorrichtung aufgenommen ist,
wobei der Steuerabschnitt dazu ausgestaltet ist, als Druckinformation (70) eine Druckinhaltsspezifizierungsdatei zum Definieren einer detaillierten Spezifikation zum Drucken von Bilddaten zu erzeugen und die erzeugte Inhaltsspezifizierungsdatei auf das Aufzeichnungsmedium aufzuzeichnen, wobei
die Druckinhaltsspezifizierungsdatei wenigstens Information, die zu druckende Bilddaten spezifiziert, und Dokumentstrukturinformation zum Definieren einer Struktur eines Dokuments umfasst,
**dadurch gekennzeichnet, dass** der Steuerabschnitt ferner dazu ausgestaltet ist, als Druckinformation (70) eine automatische Druckdatei (71) mit Information, die die Druckinhaltsspezifizierungsdatei bezeichnet, zu erzeugen, und die automatische Druckdatei (71) auf das Aufzeichnungsmedium aufzuzeichnen, wobei
die Druckinhaltsspezifizierungsdatei ferner Information aufweist, die eine externe Datei angibt, die wenigstens einen Teil der Spezifikation spezifisch beschreibt.

2. Aufzeichnungsvorrichtung nach Anspruch 1,
wobei der Steuerabschnitt dazu ausgestaltet ist, als Druckinformation (70) die Druckinhaltsspezifizierungsdatei zu erzeugen, die die externe Datei angibt, wobei die externe Datei eine Datei ist, die Information aufweist, die das Layout der zu druckenden Bilder definiert.

3. Aufzeichnungsvorrichtung nach Anspruch 1,
wobei die Information, die in der externen Datei enthalten ist, eine Position der zu druckenden Bilddaten, eine Größe der zu druckenden Bilddaten eine Position von zu druckendem Text, eine Schrifttype von Zeichen in dem Text und/oder eine Größe von Zeichen in dem Text spezifiziert.

4. Aufzeichnungsvorrichtung nach Anspruch 1,
wobei die Druckinhaltsspezifizierungsdatei Information als die Information, die zu druckenden Bilddaten spezifiziert, umfasst, die eine externe Datei bezeichnet, die die zu druckenden Bilddaten umfasst.

5. Aufzeichnungsvorrichtung nach Anspruch 1,
wobei der Steuerabschnitt dazu ausgestaltet ist, die Druckinformation auf das Aufzeichnungsmedium aufzuzeichnen, das ein erstes Verzeichnis zum Speichern von Bilddaten und ein zweites Verzeichnis mit wenigstens einem Verzeichnis zum Speichern von wenigstens de Druckinhaltsspezifizierungsdatei aufweist.

6. Aufzeichnungsvorrichtung nach Anspruch 1,
wobei die Druckinhaltsspezifizierungsdatei ferner Information aufweist, die Stilinformation bezeichnet, die das Layout der zu druckenden Bilder definiert.

7. Aufzeichnungsvorrichtung nach Anspruch 6,
wobei der Steuerabschnitt dazu ausgestaltet ist, die Druckinformation in dem Aufzeichnungsmedium aufzuzeichnen, das ein erstes Verzeichnis zum Speichern von Bilddaten und ein zweites Verzeichnis mit wenigstens einem Verzeichnis zum Speichern von wenigstens der Druckinhaltsspezifizierungsdatei aufweist.

8. Aufzeichnungsvorrichtung nach Anspruch 7,
wobei das zweite Verzeichnis ferner ein Verzeichnis zum Speichern einer Datei mit Bezug auf die Stilinformation aufweist, die von der Information bezeichnet wird, die die Stilinformation bezeichnet.

9. Aufzeichnungsvorrichtung nach Anspruch 6,
wobei der Steuerabschnitt dazu ausgestaltet ist, die Druckinformation in dem Aufzeichnungsmedium aufzuzeichnen, das ein erstes Verzeichnis zum Speichern von Bilddaten und ein zweites Verzeichnis mit wenigstens einem Verzeichnis zum Speichern von wenigstens der Druckinhaltsspezifizierungsdatei aufweist, und
ein Verzeichnis zum Speichern der Druckinhaltsspezifizierungsdatei und einer Datei, die mit der Stilinformation in Bezug steht, die von der Information bezeichnet wird, die Stilinformation bezeichnet, unter dem zweiten Verzeichnis für jede Druckinhaltsspezifizierungsdatei vorgesehen ist.

10. Aufzeichnungsvorrichtung nach Anspruch 1,
wobei die Druckinhaltsspezifizierungsdatei in einer XHTML-Drucksprache beschrieben ist.

11. Aufzeichnungsverfahren zum Erzeugen von wenigstens Druckinformation (70), die eine Spezifikation zum Drucken von Bilddaten definiert, und zum Aufzeichnen der Druckinformation (70) auf ein Aufzeichnungsmedium, mit den Schritten:
Erzeugen einer Druckinhaltsspezifizierungsdatei zum Definieren einer detaillierten Spezifikation zum Drucken von Bilddaten als der Druckinformation (70), und
Aufzeichnen der erzeugten Druckinhaltsspezifizierungsdatei auf das Aufzeichnungsmedium, und
wobei die Druckinhaltsspezifizierungsdatei wenigstens Information, die wenigstens zu druckende Bilddaten spezifiziert, und Dokumentstrukturinformation zum Definieren einer Struktur eines Dokuments aufweist,
**gekennzeichnet dadurch, dass** der Schritt des Erzeugens einer Druckinhaltsspezifizierungsdatei einer Erzeugen einer automatischen Druckdatei (71) mit Information umfasst, die die Druckinhaltsspezifizierungsdatei als die Druckinformation (70) bezeichnet, und
der Schritt des Aufzeichnens der erzeugten Druckinhaltsspezifizierungsdatei auch ein Aufzeichnen der automatischen Druckdatei (71) auf das Aufzeichnungsmedium umfasst, wobei
die Druckinhaltsspezifizierungsdatei ferner Information umfasst, die eine externe Datei bezeichnet, die wenigstens einen Teil der Spezifikation spezifisch beschreibt.

12. Aufzeichnungsmedium, das wenigstens Druckinformation (70) zum Definieren einer Spezifikation zum Drucken von Bilddaten speichert, mit, als der Druckinformation (70),
einer Druckinhaltsspezifizierungsdatei zum Definieren einer detaillierten Spezifikation zum Drucken von Bilddaten,
wobei die Druckinhaltsspezifizierungsdatei wenigstens Information, die zu druckende Bilddaten spezifiziert, und Dokumentstrukturinformation zum Definieren einer Struktur eines Dokuments aufweist, **gekennzeichnet durch**
eine automatische Druckdatei (71) mit Information, die die Druckinhaltsspezifizierungsdatei bezeichnet, wobei
die Druckinhaltsspezifizierungsdatei ferner Information umfasst, die eine externe Datei bezeichnet, die wenigstens einen Teil der Spezifikation spezifisch beschreibt.

## Revendications

1. Appareil d'enregistrement destiné générer au moins une information d'impression (70) pour définir une spécification pour imprimer des données d'images, et enregistrer l'information d'impression (70) sur un support d'enregistrement, comprenant :
une section d'accès adaptée pour monter et accéder au support d'enregistrement ; et
une section de commande adaptée pour commander l'enregistrement de l'information d'impression (70) sur le support d'enregistrement monté sur le dispositif d'accès,
où la section de commande est adaptée pour générer comme information d'impression (70) un fichier spécifiant un contenu d'impression pour définir une spécification détaillée afin d'imprimer des données d'images et d'enregistrer le fichier généré spécifiant le contenu d'impression sur le support d'enregistrement, où
le fichier spécifiant un contenu d'impression comporte au moins une information spécifiant des données d'images à imprimer et une information concernant la structure du document pour définir une structure du document, **caractérisé en ce que** la section de commande est adaptée en plus pour générer comme information d'impression (70) un fichier (71) d'impression automatique comportant une information désignant le fichier spécifiant le contenu d'impression et pour enregistrer le fichier (71) d'impression automatique sur le support d'enregistrement, où
le fichier spécifiant le contenu d'impression comporte en outre une information désignant un fichier externe qui décrit spécifiquement au moins une partie de la spécification.

2. Appareil d'enregistrement selon la revendication 1, dans lequel la section de commande est adaptée pour générer comme information d'impression (70) le fichier spécifiant le contenu d'impression désignant le fichier externe, où le fichier externe est un fichier qui comporte une information définissant la disposition des images à imprimer.

3. Appareil d'enregistrement selon la revendication 1, dans lequel l'information comprise dans le fichier externe spécifie au moins l'une d'une position des données d'images à imprimer, d'une taille des données d'images à imprimer, d'une position du texte à imprimer, d'un type de police de caractères dans le texte, et d'une taille de caractères dans le texte.

4. Appareil d'enregistrement selon la revendication 1, dans lequel le fichier spécifiant le contenu d'impression comporte une information désignant un fichier externe qui comporte les données d'images à imprimer, comme étant l'information spécifiant des données d'images à imprimer.

5. Appareil d'enregistrement selon la revendication 1, dans lequel la section de commande est adaptée pour enregistrer l'information d'impression dans le support d'enregistrement qui a un premier répertoire pour stocker des données d'images et un deuxième répertoire comportant au moins un répertoire pour stocker au moins le fichier spécifiant le contenu d'impression.

6. Appareil d'enregistrement selon la revendication 1, dans lequel le fichier spécifiant le contenu d'impression comporte en outre une information désignant une information de style qui définit la disposition des images à imprimer.

7. Appareil d'enregistrement selon la revendication 6, dans lequel la section de commande est adaptée pour enregistrer l'information d'impression dans le support d'enregistrement qui a un premier répertoire pour stocker des données d'images et un deuxième répertoire comportant au moins un répertoire pour stocker au moins le fichier spécifiant le contenu d'impression.

8. Appareil d'enregistrement selon la revendication 7, dans lequel le deuxième répertoire comporte en outre un répertoire pour stocker un fichier qui se rapporte à l'information de style qui est désignée par l'information désignant l'information de style.

9. Appareil d'enregistrement selon la revendication 6, dans lequel la section de commande est adaptée pour enregistrer l'information d'impression dans le support d'enregistrement qui a un premier répertoire pour stocker des données d'images et un deuxième répertoire comportant au moins un répertoire pour stocker au moins le fichier spécifiant le contenu d'impression, et
un répertoire pour stocker le fichier spécifiant le contenu d'impression et un fichier se rapportant à l'information de style qui est désignée par l'information, désignant une information de style est pourvu sous le deuxième répertoire pour chaque fichier spécifiant le contenu d'impression.

10. Appareil d'enregistrement selon la revendication 1, dans lequel le fichier spécifiant le contenu d'impression est décrit dans un langage d'impression XHTML.

11. Procédé d'enregistrement destiné à générer au moins une information d'impression (70) définissant une spécification pour imprimer des données d'images, et enregistrer l'information d'impression (70) sur un support d'enregistrement, comprenant les étapes qui consistent :
à générer un fichier spécifiant le contenu d'impression pour définir une spécification détaillée afin d'imprimer des données d'images, comme étant l'information d'impression (70) ; et
à enregistrer le fichier spécifiant le contenu d'impression sur le support d'enregistrement, et
où le fichier spécifiant le contenu d'impression comporte au moins une information spécifiant au moins des données d'images imprimer et une information concernant la structure du document pour définir la structure du document,
**caractérisé en ce que**
l'étape qui consiste à générer un fichier spécifiant le contenu d'impression comprend la génération d'un fichier (71) d'impression automatique comportant une information désignant le fichier spécifiant le contenu d'impression comme informations d'impression (70) ; et
l'étape qui consiste à enregistrer le fichier spécifiant le contenu d'impression comporte également l'enregistrement du fichier (71) d'impression automatique sur le support d'enregistrement, où
le fichier spécifiant le contenu d'impression comporte en outre une information désignant un fichier externe qui décrit spécifiquement au moins une partie de la spécification.

12. Support d'enregistrement stockant au moins une information d'impression (70) pour définir une spécification afin d'imprimer des données d'images, comprenant, comme étant l'information d'impression (70),
un fichier spécifiant le contenu d'impression pour définir une spécification détaillée afin d'imprimer des données d'images,
où le fichier spécifiant le contenu d'impression comporte au moins une information spécifiant des données d'images à imprimer et une information concernant la structure du document pour définir la structure du document, **caractérisé par**
un fichier (71) d'impression automatique comportant une information désignant le fichier spécifiant le contenu d'impression, où
le fichier spécifiant le contenu d'impression comporte en outre une information désignant un fichier externe qui décrit spécifiquement au moins une partie de la spécification.
